**Europäisches Patentamt**

**European Patent Office**

**Office européen des brevets**

(19)

(11) Veröffentlichungsnummer: **0 040 359**
**B1**

(12) **EUROPÄISCHE PATENTSCHRIFT**

(45) Veröffentlichungstag der Patentschrift:
02.09.87

(21) Anmeldenummer: **81103443.8**

(22) Anmeldetag: **06.05.81**

(51) Int. Cl.⁴: **G 01 B 7/30,** G 01 B 11/26,
G 01 D 5/247, G 01 P 3/48

(54) Verfahren und Vorrichtung zur Messung eines Winkels.

(30) Priorität: **14.05.80 DE 3018496**

(43) Veröffentlichungstag der Anmeldung:
**25.11.81 Patentblatt 81/47**

(45) Bekanntmachung des Hinweises auf die Patenterteilung:
**02.09.87 Patentblatt 87/36**

(84) Benannte Vertragsstaaten:
**AT CH FR GB LI NL SE**

(56) Entgegenhaltungen:
**DE-A-2 501 373
DE-A-2 649 898
DE-A-2 845 534
DE-B-1 185 406
DE-B-2 237 138
GB-A-1 498 829**

(73) Patentinhaber: **MTC Messtechnik und
Optoelektronik AG, Avenue Jean Jacques
Rousseau 5, CH- 2000 Neuchâtel (CH)**

(72) Erfinder: **Mehnert, Walter, Dr., Grillparzerstrasse
6, D-8012 Ottobrunn (DE)**

(74) Vertreter: **Strasser, Wolfgang, Dipl.- Phys,
Patentanwälte Strohschänk, Uri & Strasser
Innere Wiener Strasse 8, D-8000 München 80 (DE)**

## Beschreibung

Die Erfindung betrifft ein Verfahren und eine Vorrichtung zur Messung eines Winkels gemäß den Oberbegriffen der Ansprüche 1 bzw. 24.

Der Winkel, den zwei um eine Drehachse gegeneinander verdrehbare Körper miteinander einschliessen, ist zunächst nicht eindeutig definiert. Man kann aber davon ausgehen, daß sich in jedem konkreten Fall, in dem ein solcher Winkel gemessen werden soll, zwei von der gemeinsamen Drehachse ausgehende und jeweils starr mit dem einen bzw. dem anderen Körper verbundene Radialstrahlen festlegen lassen, deren relative Winkellage fortlaufend überwacht und gemessen werden soll. Je nach Art des verwendeten Winkelmeßverfahrens bzw. der verwendeten Winkelmeßvorrichtung sind diese beiden Radialstrahlen dann durch die Positionierung von Meßfühlern bzw. Referenzmarken eindeutig bestimmt.

Bekannte Winkelmeßverfahren, wie sie z. B. der DE-A-2 501 373, der DE-A-2 649 898 oder der DE-B-2 237 138 entnehmbar sind haben alle gemeinsam, daß bei ihnen ein als flache Kreisscheibe ausgebildeter Markierungsträger starr mit dem einen der beiden Körper so verbunden ist, daß die gemeinsame Drehachse durch den Mittelpunkt der sich mit dem Körper mitdrehenden Scheibe verläuft, während an dem anderen der beiden Körper ein diesen Markierungsträger abtastender Meßfühler starr befestigt ist. Bei diesen Anordnungen wird beispielsweise der eine der beiden oben erwähnten Radialstrahlen durch eine auf dem Markierungsträger angebrachte und durch eine besondere Formgebung von den anderen Markierungen unterscheidbare "Null-Markierung" definiert, während der zweite Radialstrahl durch den die Markierungen abtastenden Meßfühler festgelegt ist.

Um den von diesen beiden Radial strahlen bezüglich der Drehachse eingeschlossenen Winkel mit hohem Auflösungsvermögen messen zu können, ist auf der den Markierungsträger bildenden Scheibe neben der Null-Markierung eine Vielzahl von in Drehrichtung voneinander beabstandeten Markierungen in Form von radial verlaufenden Strichen angebracht, die beispielsweise eine andere Lichtdurchlässigkeit als die sie umgebenden Bereiche der Markierungsscheibe besitzen, so daß der einen elektro-optischen Sensor umfassende Meßfühler immer dann ein elektrisches Signal abgibt, wenn die Helligkeit eines auf den Sensor auffallenden, von einer auf der anderen Seite der Scheibe angeordneten Lichtquelle ausgehenden Lichtbündels durch das Vorbeilaufen eines solchen Markierungsstriches geändert wird. Verdreht sich also der eine der beiden Körper gegen den anderen, so wird eine Folge von impulsförmigen elektrischen Signalen erzeugt, durch deren Auswertung eine Information über die nach Beendigung der Drehbewegung von den beiden Körpern zueinander eingenommene Winkelstellung gewonnen werden kann.

Aus GB-A-1 498 829 ist weiterhin ein Verfahren bzw. eine Vorrichtung der im Oberbegriff des Anspruchs 1 bzw. des Anspruchs 24 genannten Art bekannt.

Die Meßgenauigkeit aller dieser bekannten Verfahren wird in entscheidendem Maße von der Präzision bestimmt, mit der die Skalenstriche auf dem Markierungsträger angeordnet sind, wobei innerhalb des Pauschalbegriffs "Präzision" folgende Einzelfaktoren von besonderer Bedeutung sind: Die einzelnen Skalenstriche müssen in Drehrichtung möglichst schmal sein und zueinander möglichst genau parallel verlaufende Begrenzungskanten aufweisen; außerdem müssen sie möglichst genau radial verlaufen und untereinander möglichst identisch sein. Weiterhin müssen die Winkelabstände der Skalenstriche, d.h. die von den Skalenstrichen bezüglich der Drehachse miteinander eingeschlossenen Winkel mit einem Höchstmaß an Genauigkeit übereinstimmen. Da es nicht genugt, wenn der bei den bekannten Verfahren zur Verwendung kommende Markierungsträger diese Eigenschaften nur bei oder unmittelbar nach seiner Fertigstellung aufweist, sind darüberhinaus sehr hohe Anforderungen an die Maßhaltigkeit und insbesondere an die Temperaturstabilität des zur Herstellung eines solchen Markierungsträgers verwendeten Materials zu stellen.

Nach dem Stand der Technik wird daher im allgemeinen so vorgegangen, daß als Markierungsträger spezielle Glasscheiben verwendet werden, in die mit sehr aufwendigen und hohe Kosten verursachenden Verfahren die erforderliche Anzahl von Markierungen in Form sehr genau positionierter und äußerst schmaler Skalenstriche beispielsweise eingeätzt wird. Dabei ist typischerweise die Strichdicke etwa gleich dem Strichabstand und liegt häufig in einer Größenordnung von ca. 10 µ. Daraus ergibt sich das weitere Problem eines sehr ungünstigen Signal-Rausch-Verhältnisses und es muß ein erheblicher optischer und/oder elektronisch-schaltungstechnischer Aufwand getrieben werden, um aus dem stark verrauschten Meßfühlerausgangssignal die den einzelnen Markierungen zugeordneten Nutzsignale für die weitere Verarbeitung zu extrahieren. Darüber hinaus wird auch die maximal erreichbare Meßgenauigkeit durch dieses schlechte Signal-Rausch-Verhältnis in nachteiliger Weise beeinflußt.

Die sich aus den eben erwähnten Problemen ergebenden hohen Herstellungskosten sowohl für den Markierungsträger als auch die Auswerteelektronik haben zur Folge, daß bisher eine sehr genaue und mit hohem Auflösungsvermögen erfolgende Winkelmessung nur in solchen, zahlenmäßig begrenzten Fällen zum Einsatz kommen konnte, in denen die Verwendung einer mit derart hohen Herstellungskosten behafteten Meßvorrichtung wirtschaftlich vertretbar war.

Demgegenüber liegt der Erfindung die Aufgabe zugrunde, ein Verfahren und eine Vorrichtung der eingangs genannten Art zu schaffen, die eine hochgenaue, gewünschtenfalls hochauflösende Winkelmessung unter Verwendung eines einfachen, kostengünstig herstellbaren Markierungsträgers ermöglichen.

Zur Lösung dieser Aufgabe sieht die Erfindung die in den Ansprüchen 1 (Verfahren) bzw. 24 (Vorrichtung) niedergelegten Merkmale vor.

Ein wesentlicher Unterschied des erfindungsgemäßen Verfahrens zum Stand der Technik und insbesondere zur GB-A-1 498 829 besteht darin, daß die auf dem Markierungsträger angeordneten Markierungen nicht anonym sondern als Individuen behandelt werden.

Dies beginnt bereits bei der den eigentlichen Winkelmessungen vorausgehenden Ermittelung des hier sogenannten Meßwinkelabstandes von wenigstens zwei Markierungen in einer entsprechend der jeweiligen Meßsituation gewählten Null-Winkelstellung der beiden Körper. Da in dieser Null-Winkelstellung die Meß-Schwerlinien der wenigstens zwei Meßfühler nicht notwendigerweise auf ein und demselben Radialstrahl liegen müssen, setzt sich der in dieser Null-Winkelstellung mit Hilfe der beiden Meßfühler meßbare Meßwinkelabstand zwischen der $\mu$-ten und der $\nu$-ten Markierung zusammen aus dem Winkelabstand, den die beiden Markierungen auf dem Markierungsträger miteinander einschließen und dem hierzu vorzeichenrichtig addierten Winkelabstand der Meß-Schwerlinien der beiden Meßfühler in der Null-Winkelstellung. Fallen die beiden Meß-Schwerlinien in der Null-Winkelstellung zusammen, so ist natürlich der Meßwinkelabstand zweier Markierungen $\mu$ und $\nu$ gleich deren tatsächlich auf dem Markierungsträger vorhandenen Winkelabstand.

Der Meßwinkelabstand zwischen zwei oder mehreren Markierungen kann auf verschiedene Arten bestimmt werden. Ein besonders bevorzugtes Verfahren zu seine Bestimmung wird weiter unten unter Bezugnahme auf Anspruch 7 beschrieben.

Die eben geschilderte Unterscheidung zwischen Winkelabstand und Meßwinkelabstand ermöglicht es, gegebenenfalls für jede einzelne Winkelmessung jeweils einen eigenen Nullpunkt zu definieren, der vom Nullpunkt der vorausgehenden oder nachfolgenden Winkelmessungen unabhängig gewählt werden kann.

Voraussetzung ist lediglich, daß für eine gewählte Null-Winkellage der beiden Körper der oben definierte Meßwinkelabstand für wenigstens ein Paar von Markierungen mit einer Genauigkeit bestimmt wird, die der Genauigkeit der bei den nachfolgenden Winkelmessungen verwendeten Zeitabstandsmessung entspricht; dieser wenigstens eine Meßwinkelabstand wird dann so gespeichert, daß seine Zuordnung zu dem betreffenden Markierungspaar erhalten bleibt. Ist dies z. B. für die m-te und die n-te Markierung geschehen, so genügt es zur Ermittlung des von den beiden Körpern zu einem beliebigen Zeitpunkt $t_1$ eingeschlossenen Winkels $\varphi(t_1)$, den Zeitabstand $\Delta\theta_{mn}(t_1)$ zwischen zwei Signalen zu messen, von denen das eine durch das Vorbeilaufen der m-ten Markierung an dem einen Meßfühler und das andere kurz darauf durch das Vorbeilaufen der n-ten Markierung an dem anderen Meßfühler erzeugt wird. Unabdingbare Voraussetzung hierfür ist allerdings, daß tatsächlich der Zeitabstand zwischen den Signalen gemessen wird, die den beiden Markierungen m und n zugeordnet sind, für die der Meßwinkelabstand $\varphi_{mn}$ bestimmt und in abrufbarer Weise gespeichert wurde. Dann läßt sich nämlich aus dem gemessenen Zeitabstand $\Delta\theta_{mn}$, der momentanen Winkelgeschwindigkeit $\omega(t_1)$, die hier zunächst als bekannt vorausgesetzt wird, und dem Meßwinkelabstand $\varphi_{mn}$ zwischen der m-ten Markierung und der n-ten Markierung für den momentanen Winkel $\varphi(t_1)$ der beiden Körper nach folgender Gleichung ein erster Wert berechnen:

$$\varphi(t_1) = \Delta\theta_{mn}(t_1)\,\omega(t_1) - \varphi_{mn} \quad (1a)$$

Da jeder Meßfühler eine Vielzahl von Markierungen überstreicht, werden vorzugsweise für eine Vielzahl von Markierungspaaren die Meßwinkelabstände mit einer der Genauigkeit der verwendeten Zeitmessung entsprechenden Genauigkeit ermittelt und unter Beibehaltung der Zuordnung zum jeweiligen Markierungspaar gespeichert. Dann läßt sich durch Ausmessung der Zeitabstände dieser weiteren Markierungen, beispielsweise zwischen den Markierungen $m+1$ und $n+1$, $m+2$ und $n+2$, usw. eine große Menge von weiteren Winkelmeßwerten nach den entsprechenden Gleichungen

$$\varphi(t_2) = \Delta\theta_{m+1,n+1}(t_2)\,\omega(t_2) - \varphi_{m+1,n+1} \quad (1b)$$

$$\varphi(t_3) = \Delta\theta_{m+2,n+2}(t_3)\,\omega(t_3) - \varphi_{m+2,n+2} \quad (1c)$$

$$\vdots$$

$$\varphi(t_r) = \Delta\theta_{\mu,\nu}(t_r)\,\omega(t_r) - \varphi_{\mu,\nu} \quad (1)$$

bestimmen, wobei die Winkelwerte $\varphi(t_r)$ miteinander übereinstimmen müssen, wenn sich die beiden Körper im betreffenden Zeitraum nicht gegeneinander bewegt haben.

Anders als bei den bekannten Verfahren, bei denen die einzelnen Markierungen nicht als Individuen sondern völlig anonym behandelt werden und dafür mit möglichst großer Exaktheit in genau definierten Winkelabständen auf dem Markierungsträger angebracht werden mussen, wird zunächst in Kauf genommen, daß bei einem mit geringem Kostenaufwand hergestellten Markierungsträger die Winkelabstände der Markierungen innerhalb relativ weiter Grenzen schwanken können und es wird die angestrebte Genauigkeit dadurch erzielt, daß man vor der eigentlichen Winkelmessung die Meßwinkelabstände der interessierenden Markierungen genau bestimmt, unter Zuordnung zu den als Individuen behandelten Markierungen speichert und dann, wenn diese auch während des Winkelmeßvorgangs als Individuen erkannten Markierungen zu den erwähnten Zeitabstandsmessungen herangezogen worden sind, auf den jeweils zugehörigen gespeicherten Meßwinkelabstandswert zurückgreift, um den momentanen Winkel zwischen den beiden Körpern nach obigen Gleichungen zu berechnen.

Bevor auf die in diesem Zusammenhang eine wichtige Rolle spielende Identifizierung der einzelnen Markierungen eingegangen wird, sei noch darauf hingewiesen, daß das erfindungsgemäße Verfahren unabhängig davon durchgeführt werden kann, ob die beiden Abtastvorrichtungen auf dem Markierungsträger dieselben Markierungen oder zwei voneinander räumlich getrennte Markierungsgruppen abtasten. Es wird jedoch der zweite dieser beiden Fälle bevorzugt, da im ersten Fall die Schwierigkeit entsteht, daß die relativen Bewegungsbahnen der beiden Abtastvorrichtungen sehr nah beieinander verlaufen, so daß sich unter Umständen erhebliche Platzprobleme vor allem dann ergeben, wenn Winkel größer 360° gemessen werden sollen. Zwar ist es bei der Verwendung von zwei räumlich voneinander getrennten Markierungsgruppen erforderlich, neben den Winkelabständen der einzelnen Markierungen innerhalb jeder Gruppe auch noch den Winkel zwischen den beiden Gruppen zu berücksichtigen, doch stellt dies im Vergleich zur Verwendung einer einzigen Markierungsgruppe nur scheinbar einen Nachteil dar.

Will man nämlich nicht einen extrem hohen und über längere Zeiträume hinweg kaum aufrechtzuerhaltenden Justierungsaufwand treiben, so werden auch dann, wenn die beiden Abtasteinrichtungen ein und dieselbe Markierungsgruppe abtasten, die beiden Spuren, auf denen dies geschieht, nicht miteinander identisch sein, sondern beispielsweise, die Spur der einen Abtastvorrichtung bezüglich der Drehachse einen etwas geringeren Radius aufweisen als die Spur der anderen Abtasteinrichtung. Da aber Markierungsträger verwendet werden sollen, bei denen die Markierungen, beispielsweise längliche, radial gerichtete Streifen ohne besonders hohen technischen Aufwand aufgebracht worden sind, muß davon ausgegangen werden, daß diese Markierungsstreifen nicht nur in ihren Winkelabständen schwanken sondern auch nicht exakt radial verlaufen. In diesem Fall wird also der Markierungsträger jeweils eine etwas andere Winkelstellung einnehmen, wenn ein und dieselbe Markierung an dem Meßfühler der einen oder am Meßfühler der anderen Abtasteinrichtung ein Signal erzeugt. Es muß also auch hier die winkelmäßige Korrelation zwischen den an dem einen Meßfühler erzeugten Signalen einerseits und den am anderen Meßfühler erzeugten Signalen andererseits hergestellt werden, so daß sich letztlich die gleiche Situation wie bei der Verwendung von zwei räumlich getrennten Markierungsgruppen ergibt. Im folgenden wird daher konkret immer nur auf die Verhältnisse des gemäß Anspruch 2 bevorzugten Falles Bezug genommen.

Wie oben ausführlich dargelegt, stellt es einen wesentlichen Aspekt des erfindungsgemäßen Verfahrens dar, daß die den zu Zeitabstandsmessungen herangezogenen Meßfühlersignalen zugeordneten Markierungen sowohl der einen als auch der anderen Gruppe jeweils als Individuen behandelt und identifiziert werden. Vorzugsweise erfolgt die Identifizierung der einzelnen Markierungen innerhalb der jeweiligen Gruppe mit Hilfe von in dieser Markierungsgruppe vorhandenen Asymmetrien.

Diese Asymmetrien können beispielsweise darin bestehen, daß sich die einzelnen Markierungen hinsichtlich ihrer Länge und/oder Breite oder durch eine andere Kodierung so voneinander unterscheiden, daß sie jeweils als Individuum erkennbar sind. Allerdings ist der hierfür erforderliche Kodierungsaufwand bei der Herstellung des Markierungsträgers und ebenso der mit Hilfe entsprechender Abtasteinrichtungen durchzuführende Dekodierungsaufwand beim eigentlichen Winkelmeßvorgang außerordentlich groß.

Deshalb wird es bevorzugt, daß mit Hilfe von Asymmetrien in jeder Markierungsgruppe nur eine Markierung identifiziert wird, die dann als Null-Markierung bei der durch Abzählen der zugehörigen Meßfühlersignale erfolgenden Identifizierung der übrigen Markierungen dieser Gruppe dient. In diesem Fall wird der erforderliche Kodierungsaufwand wesentlich geringer, da es beispielsweise genügt, die Null-Markierung einer jeden Gruppe etwas länger oder kürzer als die übrigen, einander im wesentlichen gleichen Markierungen auszubilden, und diesen Unterschied mit Hilfe eines entsprechenden Sensors abzutasten.

Gemäß einer besonders bevorzugten Ausführungsform läßt sich der hierfür erforderliche Aufwand dadurch einsparen, daß für jede der Markierungsgruppen die Zeitabstände aller während wenigstens einer Umdrehung aufeinanderfolgenden Meßfühlersignale gemessen und als Asymmetrie die dabei festgestellten, einander nicht exakt gleichen Winkelabstände der Markierungen ausgewertet werden.

Dabei ergeben sich also die zur Identifizierung der einzelnen Markierungen erforderlichen Asymmetrien dadurch ganz von selbst, daß es mit Hilfe eines entsprechend genauen Zeitmeßverfahrens immer möglich ist, die Winkelabstände zwischen den Markierungen, insbesondere zwischen den jeweils unmittelbar aufeinanderfolgenden Markierungen mit einer solchen Genauigkeit zu bestimmen, daß es selbst dann innerhalb der betreffenden Markierungsgruppe keine zwei für eine gegebene Winkelgeschwindigkeit miteinander übereinstimmende Meßwerte gibt, wenn der Markierungsträger mit weit höherer Präzision hinsichtlich der Positionierung der einzelnen Markierungen hergestellt wird, als dies im Rahmen des hier beschriebenen Verfahrens angestrebt und erforderlich ist.

Es ist somit möglich, jede der Markierungen innerhalb einer Gruppe mit Hilfe ihres Winkelabstandes von der unmittelbar vorausgehenden und/oder von der unmittelbar nachfolgenden Markierung oder aber auch mit Hilfe der Winkelabstände von zwei oder mehr vorausgehenden Markierungen als Individuum zu erkennen, wenn erst einmal sämtliche Winkelabstände aller jeweils in Drehrichtung unmittelbar aufeinanderfolgender Markierungen dieser Gruppe ausgemessen und gespeichert sind.

Soll zum Beispiel beim Vorbeilaufen der n-ten Markierung der einen Gruppe am zugehörigen Meßfühler eine bestimmte Funktion ausgelöst werden, so kann diese Auslösung dann erfolgen, wenn das erste Meßfühlersignal auftritt, nachdem das Wiedererscheinen des bekannten und in dieser Markierungsgruppe nur ein einziges Mal vorhandenen Winkelabstandes zwischen der (n-1)-ten und der (n-2)-ten Markierung erkannt worden ist.

4

Da bei dem erfindungsgemäßen Verfahren der Winkelabstand zweier Markierungen über den Zeitabstand der zugehörigen Meßfühlersignale gemessen wird und in diese Messung die momentane Winkelgeschwindigkeit des Markierungsträgers eingeht, ist es zweckmäßig, zur Identifizierung der n-ten Markierung den Quotienten beispielsweise der die Winkelabstände der (n-1)-ten zur (n-2)-ten und der (n-2)-ten zur (n-3)-ten Markierung kennzeichnenden Zeitabstände heranzuziehen, da bei dieser Quotientenbildung die momentane Winkelgeschwindigkeit herausfällt, wenn während des sich aus diesen beiden unmittelbar aufeinanderfolgenden Zeitabständen zusammensetzenden Zeitraums die Dreh- bzw. Winkelgeschwindigkeit des Markierungsträgers konstant ist; wegen der Kürze dieses Zeitraums wird diese Bedingung im allgemeinen erfüllt sein. Auch ist die Wahrscheinlichkeit, daß sich auf einem Markierungsträger innerhalb einer Markierungsgruppe verschiedene Markierungsfolgen befinden, für die die in der eben beschriebenen Weise gebildeten Quotienten im Rahmen der verwendeten sehr genauen Zeitmessung einander gleiche Werte besitzen, nochmals wesentlich kleiner als die Wahrscheinlichkeit für das zufällige Auftreten von zwei einander genau gleichen Winkelabständen zwischen aufeinanderfolgenden Markierungen.

Auch bei dem eben beschriebenen besonders bevorzugten Identifizierungsverfahren ist es nicht erforderlich, alle Markierungen einzeln zu identifizieren. Stattdessen kann auch hier mit Hilfe der vorhandenen Asymmetrien in jede Markierungsgruppe nur eine einzige Markierung identifiziert werden, die dann als Null-Markierung bei der durch Abzählen der zugehörigen Meßfühlersignale erfolgenden Identifizierung der übrigen Markierungen dient.

Es sei ausdrücklich darauf hingewiesen, daß es im allgemeinsten Fall nicht erforderlich ist, diese Null-Markierungen bei der Herstellung des Markierungsträgers von vornherein und endgültig als solche festzulegen. Vielmehr kann jede der auf dem Markierungsträger vorhandenen Markierungen während des Betriebs einer nach dem erfindungsgemäßen Verfahren arbeitenden Meßvorrichtung willkürlich herausgegriffen und für einen folgenden Zeitraum als Null-Markierung verwendet werden.

Das Herausgreifen irgendeiner Markierung als Null-Markierung erfolgt bevorzugt mit Hilfe der Vorschrift, daß der zum periodischen, d.h. mit jeder Umdrehung wieder von vorn beginnenden Abzählen der Markierungen dienende Zähler durch diejenige Markierung immer wieder auf Null zurückgesetzt werden soll, die die letzte von den drei unmittelbar aufeinanderfolgenden Markierungen ist, deren beide Zeitabstände den kleinsten oder alternativ den größten Quotienten ergeben.

Zur Vereinfachung ist es jedoch auch möglich, anstelle von oder zusätzlich zu den in den Markierungsgruppen "natürlicherweise" vorhandenen Asymmetrien "absichtlich" erzeugte Asymmetrien zur Identifizierung zumindest der Null-Markierung zu verwenden. So kann zum Beispiel vorgesehen sein, daß eine der Markierungen dadurch als Null-Markierung festgelegt wird, daß ihr Winkelabstand zu einer ihrer unmittelbaren Nachbarmarkierungen sich wesentlich von den Winkelabständen aller anderen einander unmittelbar benachbarten Markierungen unterscheidet.

Wie die oben wiedergegebenen Gleichungen (1) zeigen, ist es zur erfindungsgemäßen Bestimmung des momentanen Winkels $\varphi(t)$ zwischen den beiden Körpern nicht nur erforderlich, die für die momentane Zeitabstandsmessung $\Delta\theta_{\mu,\nu}(t)$ herangezogenen Markierungen $\mu$ und $\nu$ als solche zu identifizieren, sondern es muß auch der Meßwinkelabstand $\varphi_{\mu,\nu}$ dieser Markierungen bekannt sein. Nun ist es zwar prinzipiell möglich, einen ohne besonders großen Aufwand hergestellten Markierungsträger vor seiner Verwendung im Rahmen des erfindungsgemäßen Meßverfahrens sorgfältig auszumessen und die einzelnen Meßwinkelabstände zwischen den Markierungen der einen und den Markierungen der anderen Gruppe in einem elektronischen Festwertspeicher abzuspeichern und sie so für die später erforderlichen Rechenoperationen zur Verfügung zu stellen. Dies würde allerdings bedeuten, daß man an den exakt radialen Verlauf der einzelnen Markierungen in jeder Gruppe und an die Langzeitkonstanz der gesamten Anordnungsgeometrie außerordentlich hohe Anforderungen stellen müßte.

Zur Vermeidung dieser Schwierigkeiten ist für eine besonders bevorzugte Variante des Winkel-Meßverfahrens nach Anspruch 7 vorgesehen, daß mit Hilfe der Winkelmeßvorrichtung selbst zur Bestimmung wenigstens eines Meßwinkelabstandes in der Null-Winkelstellung der beiden Körper der Zeitabstand zwischen einem an dem einen Meßfühler durch eine identifizierte Markierung der einen Gruppe hervorgerufenen Signal und einem an dem anderen Meßfühler durch eine identifizierte Markierung der anderen Gruppe hervorfgerufenen Signal gemessen und mit der während der Messung herrschenden Winkelgeschwindigkeit des Markierungsträgers multipliziert wird. Diese Multiplikation liefert den Meßwinkelabstand dieser beiden zu den verschiedenen Gruppen gehörenden Markierungen und somit einen Winkel-Anschluß zwischen den beiden Gruppen.

Wie berits erwähnt, wird mit dieser Messung und Berechnung nicht der wahre Winkelabstand der beiden betrachteten Markierungen auf dem Markierungsträger sondern der Meßwinkelabstand dieser Markierungen erfaßt, in den der zu diesem Zeitpunkt zwischen den beiden durch die Meßfühler verlaufenden Radialstrahlen eingeschlossene, durch die erfindungsgemäße Vorrichtung für sich allein nicht meßbare Nullwinkel eingeht. Durch diese Zeitabstandsmessung wird also ein willkürlicher Nullpunkt der Winkelmessung definiert, der sich aufgrund des beschriebenen Verfahrens in völlig beliebiger Weise festlegen und je nach Bedarf auch wieder ändern läßt. Führt man z. B. die in Rede stehende Zeitabstandsmessung zu einem Zeitpunkt durch, in dem dafür gesorgt ist, daß die beiden durch die Meßfühler verlaufenden Radialstrahlen miteinander genau zur Deckung kommen, so wird diese Stellung der beiden Körper, deren Winkelabstand gemessen werden soll, als Null-Winkelstellung definiert. Soll dagegen die Null-Winkelstellung der Winkelmessung dadurch definiert sein, daß in ihr zwei vorgebbare Kanten der gegeneinander verdrehbaren Körper miteinander fluchten, die sich bei der Drehbewegung der Körper aufeinander zu bzw. voneinander weg bewegen, so wird die oben beschriebene, den Anschluß zwischen den beiden Markierungsgruppen herstellende Zeitabstandsmessung dann durchgeführt, wenn diese beiden Körperkanten sich in der gewünschten Lage befinden.

Der auf den Nullpunkt der Winkelmessung bezogene Anschluß zwischen den beiden Markierungsgruppen kann auch dadurch hergestellt werden, daß die Zeitabstände für mehrere Markierungspaare in der beschriebenen Weise gemessen und zur Ermittelung der zugehörigen Meßwinkelabstände mit der momentanen Winkelgeschwindigkeit multipliziert werden. Bildet man aus dieser Vielzahl von Messungen den Mittelwert, so läßt sich hierdurch die Meßgenauigkeit nochmals steigern.

Weiterhin ist es vorteilhaft, gemäß Anspruch 9 in einem Eichlauf, der zumindest einmal vor den eigentlichen Winkelmeßvorgängen erfolgt, zunächst in einem ersten Schritt die Winkelabstände zwischen den jeweils einander unmittelbar benachbarten Markierungen innerhalb einer jeden Markierungsgruppe dadurch zu bestimmen, daß man die Zeitabstände der diesen Markierungen zugeordneten Meßfühlersignale zumindest während einer vollen Umdrehung des Markierungsträgers mißt. Die Größe der so gewonnenen Zeitabstandsmeßwerte hängt natürlich von der dabei herrschenden Winkelgeschwindigkeit bzw. Drehgeschwindigkeit des Markierungsträgers ab; sie müssen daher mit dem Wert dieser Winkelgeschwindigkeit multipliziert werden, damit man die für die folgenden Messungen benötigten Eichwerte erhält, die dann so abgespeichert werden, daß ihre Zuordnung zu den individuellen und wieder identifizierbaren Markierungen erhalten bleibt.

Um ein hohes Auflösungsvermögen der Winkelmessung zu erzielen, werden nach Anspruch 9 unter Heranziehung der aus dem Eichlauf bekannten Winkelabstände innerhalb der einzelnen Markierungsgruppen für eine Vielzahl von Paaren von Markierungen, von denen immer die eine zur einen und die andere zur anderen Markierungsgruppe gehört, die auf den in der oben beschriebenen Weise definierten Nullpunkt der Winkelmessung bezogenen Meßwinkelabstände berechnet und gespeichert, so daß sie dann bei den eigentlichen Winkelmessungen sofort zur Verfügung stehen.

Die sowohl bei der Ermittelung der Meßwinkelabstände als auch bei den Eichmessungen eingehende Winkelgeschwindigkeit des Markierungsträgers kann zum Beispiel dadurch bekannt sein, daß der den Markierungsträger in eine ständige Rotation versetzende Antrieb so geregelt wird, daß die Geschwindigkeit dieser Rotation auf einem vorgegebenen Wert konstant gehalten wird. Neben dem hierfür erforderlichen schaltungstechnischen Aufwand hat dies den Nachteil, daß sich die in die schließlich durchzuführende Winkelmessung als wesentlicher Bestandteil eingehenden Eichwerte nur mit der Genauigkeit bestimmen lassen, mit der die Drehgeschwindigkeit des Markierungsträgers konstant haltende Regelvorrichtung arbeitet. Dies ist für viele Anwendungsfälle nicht ausreichend.

Daher ist vorzugsweise vorgesehen, daß die Winkelmeßanordnung die während der Bestimmung der Meßwinkelabstände bzw. während der Eichläufe herrschende Drehgeschwindigkeit des Markierungsträgers gemäß der auf einer gleichzeitig eingereichten Patentanmeldung beruhenden europäischen Patentschrift 0 039 900 selbst bestimmt, deren Inhalt hierdurch ausdrücklich in den Offenbarungsgehalt der vorliegenden Beschreibung mit einbezogen wird.

Dies kann gemäß Anspruch 10 entweder dadurch geschehen, daß dann, wenn jede der Markierungsgruppen nur mit einem einzigen Meßfühler abgetastet wird, die oben beschriebenen Eichlauf-Messungen über wenigstens zwei volle Umdrehungen des Markierungsträgers hinweg durchgeführt werden. Man erhält dann für jede Markierungsgruppe wenigstens zwei Reihen von Zeitabstandsmeßwerten, wobei die gleiche Platzziffer innerhalb einer jeden Meßreihe aufweisende Meßwerte immer von demselben Markierungspaar stammen. Stimmen nun sämtliche, einander in dieser Weise entsprechende Meßwerte der verschiedenen Meßreihen innerhalb vorgegebener Toleranzgrenzen miteinander überein, so kann daraus der Schluß gezogen werden, daß die Drehgeschwindigkeit des Markierungsträgers während der Aufnahme dieser Meßreihen, d.h. beispielsweise während zweier Umdrehungen konstant war. Mißt man während dieser Umdrehungen zumindest für eine Markierung die Zeitabstände der Signale, die von dieser Markierung beim ersten und beim darauffolgenden zweiten Vorbeilaufen an einem Meßfühler, d.h. also bei einer Drehung des Markierungsträgers um genau 360° erzeugt worden sind, so erhält man hieraus ein unmittelbares Maß für diese während des Eichlaufes konstante Drehgeschwindigkeit, mit der dann die Meßwerte entweder der während der ersten Volldrehung gewonnenen und zwischengespeicherten Meßreihe oder die hiermit ja praktisch identischen Meßwerte der zweiten Meßreihe zur Gewinnung der erforderlichen Eichwerte multipliziert werden.

Die für dieses Verfahren einzuhaltende Forderung, daß die Winkelgeschwindigkeit des Markierungsträgers während wenigstens zweier Volldrehungen konstant bleiben muß, läßt sich ohne weiteres erfüllen, da ja selbst dann, wenn die Drehgeschwindigkeit des frei laufenden und keinerlei Belastungen unterliegenden Markierungsträgers des öfteren schwankt, dazwischen doch immer wieder Zeiträume liegen, in denen keine derartigen Schwankungen auftreten. Will man die Zeit, während derer die Winkelgeschwindigkeit des Markierungsträgers zur Durchführung eines Eichlaufes konstant sein muß, noch verkürzen, so ist es beispielsweise möglich, jede Markierungsgruppe mit zwei einander diametral gegenüberliegenden Meßfühlern abzutasten. Das Verfahren läuft Prinzipiell genau so wie oben beschrieben, doch kann man hier bereits nach einer halben Umdrehung mit dem Vergleich der beiden hier an den verschiedenen Meßfühlern entstehenden Meßreihen beginnen, so daß sich der gesamte Eichlauf innerhalb einer vollen Umdrehung abschließen läßt.

Eine andere Möglichkeit zur Überprüfung der Konstanz der Winkelgeschwindigkeit besteht darin, daß man hierzu nicht die Zeitabstände der zu den jeweils einander unmittelbar benachbarten Markierungen gehörenden Signale verwendet, sondern über zwei volle Umdrehungen des Markierungstägers hinweg für jede Markierung den Zeitabstand zwischen dem bei einem ersten Vorbeilaufen dieser Markierung am Meßfühler ausgelösten Signal und dem von derselben Markierung beim nächsten Vorbeilaufen an diesem Meßfühler erzeugten Signal mißt und alle diese 360°-Zeitabstände miteinander vergleicht. Ergibt sich hier eine Übereinstimmung innerhalb vorgegebener Toleranzgrenzen, so kann man auch hieraus auf eine Konstanz der Drehgeschwindigkeit des Markierungsträgers während dieses Zeitraums schließen und die gleichzeitig gemessenen Zeitabstände der zu einander benachbarten Märkierungen gehörenden Signale nach einer entsprechenden Umrechnung als Eichwerte benutzen.

Die eben beschriebenen Eichmessungen müssen zwar mindestes einmal durchgeführt werden, bevor der eigentliche Winkelmeßbetrieb aufgenommen werden kann. Um keine besonderen Anforderungen an die Langzeitkonstanz insbesondere der Geometrie der Meßanordnung stellen zu müssen, wird es jedoch bevorzugt, daß der Eichlauf zur ständigen Nacheichung wiederholt wird. Dies kann zwischen den einzelnen Winkelmeßvorgängen geschehen.

Grundsätzlich stellt es aber keine besondere Schwierigkeit dar, praktisch gleichzeitig mit den Winkelmeßvorgängen Meßwerte zu gewinnen, die für eine ständige Nacheichung des Systems herangezogen werden können. So ist es z. B. möglich, bei jeder Umdrehung des Markierungsträgers an jeden Meßfühler die Zeitabstände zwischen allen unmittelbar aufeinanderfolgenden Meßfühlersignalen zu messen und mit den entsprechenden Zeitmeßwerten der vorausgehenden Umdrehung zu vergleichen. Stellt sich heraus, daß die erfaßten Werte nicht innerhalb vorgegebener Toleranzgrenzen miteinander übereinstimmen, so wird zunächst an den alten, gespeicherten Eichwerten festgehalten und die auftretende Abweichung als Kennzeichen für eine momentane Änderung innerhalb des Meßsystems interpretiert. Sobald aber zwei aufeinanderfolgende Umdrehungen des Markierungsträgers wieder zu denselben Zeitabstandsmeßwerten führen, d.h. also diese Zeitabstandsmeßwerte innerhalb vorgegebener Toleranzgrenzen miteinander übereinstimmen, können sofort neue Eichwerte gebildet und anstelle der alten Eichwerte gespeichert werden. Dadurch wird die Meßanordnung in die Lage versetzt, sehr rasch auf irgendwelche auftretenden Drifterscheinungen zu reagieren und den Einfluß dieser Drifterscheinungen zu eliminieren.

Bei den bisherigen Überlegungen war immer davon ausgegangen worden, daß die momentane Winkelgeschwindigkeit des Markierungsträgers bekannt ist und daß deshalb ihr Wert für die beispielsweise nach den Gleichungen (1) erforderlichen Berechnungen zur Verfügung steht. Dies kann, wie bereits erwähnt, dadurch erreicht werden, daß man die den Markierungsträger für seine ständige Rotation antreibende Antriebsvorrichtung auf eine konstante Winkelgeschwindigkeit einregelt, was aber zu den erwähnten Schwierigkeiten insbesondere hinsichtlich der Genauigkeit des momentanen Winkelgeschwindigkeitswertes führt.

Ein besonderer Vorteil des hier beschriebenen Verfahrens ist daher darin zu sehen, daß nicht nur während des Eichlaufes sondern während jeder Umdrehung mit Hilfe von Zeitabstandsmeßwerten die momentane Winkelgechwindigkeit des Markierungsträgers äußerst exakt gemessen werden kann. Sind nämlich, was nach abgeschlossenem Eichlauf der Fall ist, die Absolutwerte der Winkelabstände der Markierungen wenigstens einer Markierungsgruppe bekannt, so kann die momentane Winkelgeschwindigkeit bzw. Drehgeschwindigkeit des Markierungsträgers dadurch bestimmt werden, daß man die Zeitabstände der von diesen Markierungen an dem zugehörigen Meßfühler erzeugten Signale mißt und nach folgender Gleichung mit den gespeicherten Eichwerten vergleicht:

$$\omega(t) = \frac{\Delta T_{E\mu,\mu+1}}{\Delta T_{\mu,\mu+1}(t)}\,\omega_E. \quad (2)$$

Hierbei bedeuten $\omega(t)$ die momentane Winkelgeschwindigkeit des Markierungsträgers, $\Delta T_{E\mu,\mu+1}$ den beim Eichlauf ermittelten Zeitabstand zwischen den beiden zu den identifizierten Markierungen $\mu$ und $\mu+1$ gehörenden Meßfühlersignalen, $\Delta T_{\mu,\mu+1}(t)$ den momentan gemessenen Zeitabstand der zu diesen Markierungen gehörenden Signale und $\omega_E$ die beim Eichlauf ermittelte Winkelgeschwindigkeit.

Zur Bestimmung der momentanen Winkelgeschwindigkeit $\omega(t)$ aus den gespeicherten Eichwerten und dem momentanen Meßwert $\Delta T_{\mu,\mu+1}(t)$ ist also nur eine einfache Rechenoperation erforderlich, die sich auf elektronischem Weg ohne weiteres und mit geringem apparativen Aufwand durchführen läßt.

Bei dem eben beschriebenen Verfahren zur Messung der momentanen Winkelgeschwindigkeit $\omega(t)$ des Markierungsträgers ist von besonderer Bedeutung, daß die betreffenden Meßwerte immer nur eine Integration der differentiellen Größe "Winkelgeschwindigkeit" über den sehr kurzen Zeitraum darstellen, der zwischen den verwendeten unmittelbar aufeinanderfolgenden Markierungen zugeordneten Meßfühlersignalen liegt. Es wird hier also keinesfalls der Mittelwert der Winkelgeschwindigkeit über eine oder gar mehrere volle Umdrehungen des Markierungsträgers gebildet, so daß die beim Eichlauf bestehende Forderung einer Konstanz der Winkelgeschwindigkeit über einen langen Zeitraum hinweg entfällt. Die für die Bestimmung von $\varphi(t)$ benötigte momentane Winkelgeschwindigkeit $\omega(t)$ kann also mit der erforderlichen Genauigkeit auch dann gemessen werden, wenn der Markierungsträger seine Rotationsgeschwindigkeit gerade ändert.

Aus den oben gemachten Ausführungen geht hervor, daß sämtliche für die Berechnung des momentanen Winkels $\varphi(t)$ gemäß Gleichungen (1) erforderlichen Größen aufgrund des beshriebenen Verfahrens durch reine Zeitabstandsmessungen zwischen Meßfühlersignalen gewonnen werden können.

Da Zeitabstände zwischen zwei aufeinanderfolgenden elektrischen Signalen aber ohne hohen technischen und kostenmäßigen Aufwand beispielsweise mit Hilfe einer quarzgesteuerten Oszillatorschaltung elektronisch sehr genau bestimmt werden können, erhält man den gesuchten Winkel $\varphi(t)$ mit der Genauigkeit der verwendeten Zeitmessung und völlig unabhängig davon, mit welcher Genauigkeit bzw. Regelmäßigkeit die durch die Meßfühler abgetasteten Markierungen auf dem Markierungsträger angebracht worden sind. Gegenüber den bekannten Winkelmeßverfahren lassen sich also durch die Verwendung eines stark verbilligten Markierungsträgers erhebliche Herstellungskosten einsparen, von denen nur ein sehr geringer Teil durch den etwas größeren elektronischen Meß- und Auswerteaufwand wieder verbraucht wird.

Darüber hinaus kann für alle Teile einer nach dem beschriebenen Verfahren arbeitenden Meßvorrichtung mit Ausnahme der Zeitmeßeinheit auf besondere Maßnahmen zur Sicherung einer Langzeitkonstanz verzichtet werden da sich, wie bereits erwähnt, ein solches Meßsystem selbsttätig immer wieder nacheicht und somit in der Lage ist, den Einfluß sowohl kurzfristiger Schwankungen als auch langfristiger Drifterscheinungen auf das Meßergebnis vollständig zu eliminieren.

Zwar ist es prinzipiell möglich, für die Bestimmung des momentanen Winkels zwischen den beiden gegeneinander verdrehbaren Körper den Zeitabstand zwischen zwei beliebig herausgegriffenen, identifizierten Markierungen, von denen die eine zur einen Markierungsgruppe und die andere zur anderen Markierungsgruppe gehört, zu messen. Bevorzugt wird jedoch die Verfahrensvariante nach Anspruch 14, die insofern einen Sonderfall des im Zusammenhang mit Anspruch 1 und den Gleichungen (1) beschriebenen Meßverfahrens darstellt, als davon ausgegangen wird, daß einerseits zwei räumlich voneinander getrennte Markierungsgruppen vorhanden sind, von denen die eine von dem einen und die andere von dem anderen Meßfühler abgetastet wird, und daß andererseits die nach Gleichung (1) erforderlichen Zeitabstände $\Delta\theta_{\mu,\nu}(t)$ nicht zwischen beliebigen identifizierten Markierungen der einen und der anderen Markierungsgruppe sondern so gemessen werden, daß die Zeitabstandsmessung im Einzelfall zwar durch das Vorbeilaufen einer beliebigen, identifizierten, hier durch den Zählindex $\mu$ gekennzeichneten Markierung eingeleitet, dann aber durch das unmittelbar nächste, am anderen Meßfühler auftretende, der entsprechenden, durch den Zählindex $\nu$ gekennzeichneten identifizierten Markierung der anderen Gruppe zugeordnete Signal beendet wird. Die eben erwähnten Zeitabstände werden im folgenden kurz als "gemischte" Zeitabstände bezeichnet, um deutlich zu machen, daß sie zwischen Signalen gemessen werden, die zu Markierungen aus verschiedenen Gruppen gehören.

Damit die Zeitabstände $\Delta\theta_{\mu,\nu}(t)$ überhaupt in sinnvoller Weise zur Berechnung des momentanen Winkels $\varphi(t)$ zwischen den beiden Körpern herangezogen werden können, muß die während des jeweiligen Meßzeitraumes herrschende Winkelgeschwindigkeit $\omega(t)$ des Markierungsträgers in dem Sinn konstant sein, daß sie zumindest zu dem Zeitpunkt, in dem die die Messung einleitende Markierung $\mu$ an ihrem Meßfühler vorbeiläuft, denselben Wert besitzt, wie zu dem Zeitpunkt, in dem die die Messung beendende Markierung $\nu$ an dem anderen Meßfühler das zugehörige Signal auslöst.

Da die momentane Winkelgeschwindigkeit $\omega(t)$ aber nicht zu diesen Zeitpunkten als infinitesimal kleiner Wert sondern jeweils nur als Mittelwert über den (wenn auch sehr kleinen) Zeitraum hinweg bestimmt werden kann, der vergeht, bis zwei unmittelbar aufeinanderfolgende Markierungen an einem Meßfühler vorbeigelaufen sind, wird die Konstanz der Winkelgeschwindigkeit in obigem Sinne vorzugsweise gemäß Anspruch 15 dadurch überprüft, daß man ihren Mittelwert über einen der Messung von $\Delta\theta_{\mu,\nu}$ unmittelbar vorausgehenden Zeitraum, nämlich in der Zeit zwischen dem Vorbeilaufen der ($\mu$-1)-ten und der $\mu$-ten Markierung, und über einen der Messung von $\Delta\theta_{\mu,\nu}$ unmittelbar folgenden Zeitraum, nämlich in der Zeit zwischen dem Vorbeilaufen der ($\mu$+1)-ten und der ($\mu$+2)-ten Markierung an dem betreffenden Meßfühler bestimmt und diese beiden Mittelwerte miteinander vergleicht. Stimmen sie innerhalb vorgegebener Toleranzgrenzen miteinander überein, so kann daraus mit großer Zuverlässigkeit der Schluß gezogen werden, daß sich die Winkelgeschwindigkeit während der Messung von $\Delta\theta_{\mu,\nu}$ in obigem Sinne nicht geändert hat.

Da vorzugsweise eine Vielzahl von "gemischten" Zeitabständen gemessen wird, beispielsweise um durch Mittelwertbildung der so erhaltenen Winkelwerte die Meßgenauigkeit noch weiter zu steigern, ist es zweckmäßig, die nach Anspruch 13 ohnehin laufend gemessenen Winkelgeschwindigkeitswerte ständig für die eben beschriebene Überprüfung heranzuziehen. Zeigt sich, daß die Winkelgeschwindigkeit des Markierungsträgers sich vorübergehend ändert, so werden die in diesem Zeitraum gewonnenen Meßwerte $\Delta\theta_{\mu,\nu}$ nicht zur Berechnung des momentanen Winkels zwischen den beiden Körpern herangezogen, sondern es wird solange gewartet, bis die Winkelgeschwindigkeit $\omega(t)$ des Markierungsträgers wieder konstant ist. Da, wie bereits erwähnt, diese Konstanz nur für äußerst kurze Zeiträume, nämlich jeweils nur solange gewährleistet sein muß, bis vier unmittelbar aufeinanderfolgende Markierungen an einem Meßfühler vorbeigelaufen sind, um einen weiteren Winkelmeßwert zu erhalten, wird dies im allgemeinen sehr schnell wieder der Fall sein.

Bevor aus mehreren Winkel-Meßwerten der Mittelwert gebildet wird, ist zu überprüfen, ob nicht während des Meßzeitraums eine Drehbewegung zwischen den beiden Körpern oder eine andere, das Meßergebnis beeinflussende Störung aufgetreten ist. Dies wird dadurch erreicht, daß man die einzelnen Winkel-Meßwerte miteinander vergleicht und den Mittelwert erst dann bildet, wenn sie innerhalb vorgegebener Toleranzgrenzen miteinander übereinstimmen.

An dieser Stelle sei darauf hingewiesen, daß wegen der freien Verdrehbarkeit der beiden Körper gegeneinander ohne weiteres Winkelstellungen auftreten können, in denen der auszumessende Zeitabstand zwischen den von den beiden Meßfühlern stammenden Signalen praktisch beliebig kurz wird. Daher wird die Zeitmessung so durchgeführt, daß auch solche "Beinahe-Koinzidenzen" bzw. echte Koinzidenzen in der richtigen Weise erfaßt und ausgewertet werden. Hierauf wird weiter unten nochmals genauer eingegangen. Für das Auflösungsvermögen der Messung des momentan von den beiden Körpern bzw. den erwähnten Radialstrahlen eingeschlossenen Winkels $\varphi$ bedeutet das, daß dieses Auflösungsvermögen nicht durch den Winkelabstand der auf dem Markierungsträger einander benachbarten Markierungen sondern allein durch das sehr hohe Auflösungsvermögen der verwendeten Zeitabstandsmessung bestimmt wird.

Ein besonders wichtiger Aspekt des hier beschriebenen Verfahrens ist darin zu sehen, daß eine nach ihm arbeitende Winkelmeßvorrichtung ohne besonders zusätzlichen technischen Aufwand als extrem genau arbeitender Drehzahlgeber insbesondere für sehr langsame Drehgeschwindigkeiten bis zu einigen tausendstel Hertz und weniger eingesetzt werden kann. Wird nämlich, wie oben beschrieben, eine Reihe von Zeitabstandsmessungen zwischen den zu verschiedenen Markierungsgruppen gehörenden Markierungen zugeordneten Signalen durchgeführt und werden diese Meßwerte miteinander verglichen, so läßt sich eine aufgrund einer während dieses Zeitraums auftretenden. Relativdrehung zwischen den beiden Körpern fortschreitende Änderung dieser Werte mit sehr hoher Genauigkeit feststellen und daraus die dieser Relativdrehung zugrundeliegende Winkelgeschwindigkeit berechnen.

Alternativ hierzu können auch gemäß Anspruch 18 an beiden Meßfühlern die zur Ermittlung der momentanen Drehgeschwindigkeit des Markierungsträgers erforderlichen, oben beschriebenen Messungen durchgeführt und aus einem Vergleich der an den beiden Meßfühlern gewonnenen, unterschiedlichen Ergebnisse die entsprechende Winkelgeschwindigkeit bestimmt werden.

Weiterhin können auch die beiden eben beschriebenen Verfahren zur Messung langsamer Winkelgeschwindigkeiten miteinander kombiniert werden.

Aus den bisher gemachten Ausführungen ergibt sich, daß die Genauigkeit des beschriebenen Winkelmeßverfahrens einzig und allein von der Genauigkeit abhängt, mit der die im einzelnen interessierenden Zeitabstände gemessen werden. Daher kommt im Rahmen des vorliegenden Verfahrens dieser Zeitabstandsmessung eine besondere Bedeutung zu, und es wird bevorzugt vorgesehen, daß für die verschiedenen Zeitabstandsmessungen die Impulse eines freilaufenden, quarzgesteuerten Oszillators abgezählt werden und daß beim Auftreten eines Signals an dem einen oder dem anderen Meßfühler der nach der steigenden Flanke des nächsten Oszillatorimpulses erreichte Zählwert ausgelesen und weiter verarbeitet wird.

Statt der nächsten steigenden Flanke kann auch die nächste fallende oder einfach die nächste Impulsflanke verwendet werden. In jedem Fall ermöglicht es dieses Verfahren, die interessierenden Zeitabstände dadurch zu erhalten, daß man die Differenz der betreffenden Zählwerte bildet und mit der sehr genau bekannten und festliegenden Periodendauer bzw. halben Periodendauer der Oszillatorschwingung multipliziert. Allerdings führt dies nur dann zur einer hohen Meßgenauigkeit, wenn die Signale, deren Zeitabstand bestimmt werden soll, so weit auseinanderliegen und/oder der Oszillator mit einer so hohen Frequenz schwingt, daß zwischen den beiden Signalen eine so große Anzahl von Oszillatorperioden bzw. -impulsen auftritt, daß die Tatsache keine wesentliche Rolle mehr spielt, daß bei dieser Art der Messung die kleinste, nicht mehr unterteilbare Zeiteinheit die Länge einer ganzen bzw. einer halben Oszillatorperiode ist.

Da nun, wie bereits erwähnt, der Zeitabstand zwischen zwei Signalen, die von verschiedenen Meßfühlern abgegeben werden, beliebig klein werden kann, ist die obige Voraussetzung allenfalls für mit extrem hoher Frequenz schwingende Oszillatoren erfüllbar, bei denen man ohne großen Meßfehler zwei innerhalb einer Oszillatorperiode bzw. Halbperiode auftretende Ereignisse einfach als "gleichzeitig" betrachten kann.

Um den für solche extrem hochfrequente Oszillatoren erforderlichen Aufwand zu vermeiden und dennoch zu sehr genauen Zeitabstandsmeßwerten zu gelangen, ist bei einer bevorzugten Variante vorgesehen, daß zur Bestimmung der zeitlichen Lage der Meßfühlersignale innerhalb der jeweiligen Schwingungsperiode des Oszillators durch diese Signale jeweils eine dem betreffenden Meßfühler zugeordnete Zeit/Amplituden-Wandlerschaltung gestartet und durch die steigende Flanke des nächsten Oszillatorimpulses angehalten wird.

Liegen die beiden Signale, deren Zeitabstand gemessen werden soll, soweit voneinander getrennt, daß zwischen ihnen eine oder mehrere Oszillatorperioden auftreten, so wird ihr Zeitabstand nach diesem Verfahren praktisch durch drei Einzelmessungen, nämlich eine durch die Abzählung der Oszillatorimpulse gegebene Grobzeitmessung und zwei mit Hilfe der Zeit/Amplituden-Wandlerschaltung bzw. -schaltungen durchgeführte Feinzeitmessungen bestimmt, deren Ergebnisse vorzeichenrichtig zu dem interessierenden Gesamt-Zeitabstand aufsummiert werden.

Liegen dagegen die beiden Signale so dicht beieinander, daß sie in dieselbe Schwingungsperiode des Oszillators fallen (Grobmeßwert = 0), was bei geeigneter Wahl der Oszillatorfrequenz bezüglich der Drehgeschwindigkeit des Markierungsträgers und der Anzahl der in einer Markierungsgruppe enthaltenen Markierungen nur für von verschiedenen Meßfühlern stammende Signale eintreten kann, so steht für jedes dieser Signale eine eigene Zeit/Amplituden-Wandlerschaltung zur Verfügung, die den zeitlichen Abstand dieses Signals von der nächsten steigenden Oszillatorflanke mißt. Die Differenz dieser beiden Zeitfeinmeßwerte ergibt dann den gesuchten Zeitabstandswert mit sehr großer Genauigkeit auch dann, wenn er nahezu oder exakt gleich Null ist.

Da die üblichen Zeit/Amplituden-Wandlerschaltungen über längere Zeiten hinweg Drifterscheinungen aufweisen können, wobei sich die jeweils innerhalb bestimmter Zeitspannen nach dem Start-Signal erreichte Ausgangsamplitude ändert, ist vorzugsweise vorgesehen, daß jede Zeit/Amplituden-Wandlerschaltung immer wieder dadurch nachgeeicht wird, daß sie durch eine Flanke eines Oszillatorimpulses gestartet und durch eine nachfolgende Oszillatorimpulsflanke angehalten wird und daß der so erhaltene Zeitmeßwert der Zeit/Amplituden-Wandlerschaltung mit dem zwischen diesen beiden Oszillatorimpulsflanken liegenden Zeitraum verglichen wird.

Es wurde oben bereits ausgeführt, daß die Genauigkeit und Langzeitkonstanz des vorliegenden Winkel-

Meßverfahrens nur von der Genauigkeit und der Langzeitkonstanz des zur Ausmessung der interessierenden Winkelabstände verwendeten Zeitmeßverfahrens abhängt. Dadurch, daß nun auch bei der die Schwingungsperioden des quarzgesteuerten Oszillators zeitlich auflösenden Zeitmessung die keineswegs die Langzeitkonstanz eines Quarzes besitzenden Zeit/Amplituden-Wandlerschaltung mit Hilfe des Quarzes ständig nachgeeicht werden, erhält das gesamte Winkelmeßverfahren dieselbe Genauigkeit und Langzeitkonstanz wie der Quarz, ohne daß an die übrigen Teile der erfindungsgemäßen Vorrichtung in dieser Hinsicht irgendwelche besonderen Forderungen gestellt werden müßten. Da auch über sehr lange Zeiten hinweg sehr genau schwingende Quarze kostengünstig zur Verfügung stehen, liefert das beschriebene Verfahren einen außerordentlich preiswerten und dennoch extrem genau arbeitenden Winkelmesser.

Die üblichen Zeit-Amplituden-Wandlerschaltungen weisen überdies die Eigenschaft auf, daß die Amplitude ihres Ausgangssignals erst nach einer gewissen Anlaufzeit nach jedem Startsignal linear mit der Zeit anwächst, während unmittelbar nach dem Startsignal eine mehr oder weniger starke Nichtlinearität vorhanden ist. Da der freilaufende Oszillator mit den Meßfühlersignalen in keiner Weise synchronisiert ist, ist es ohne weiteres möglich, daß zwischen dem die Zeit/Amplituden-Wandlerschaltung startenden Meßfühlersignal und der nächsten zum Anhalten verwendeten Oszillatorimpulsflanke ein so kurzer Zeitraum liegt, daß die Zeit/Amplituden-Wandlerschaltung im nichtlinearen Bereich arbeitet, was zu einer Verfälschung des so gewonnenen Zeitmeßwertes führen kann.

Um hier zu noch besser reproduzierbaren und genaueren Ergebnissen zu gelangen, ist vorgesehen daß das Anhalten der Zeit/Amplituden-Wandlerschaltung durch die steigende Flanke des entsprechenden Oszillatorimpulses bei jeder Zeitabstandsmessung und bei jeder Eichmessung mit einer vorbestimmten zeitlichen Verzögerung erfolgt und daß die Zeit/Amplituden-Wandlerschaltung nach jeder dieser Messungen durch ein schaltungsintern erzeugtes Startsignal gestartet und durch ein gleichzeitig mit diesem Startsignal erzeugtes, ebenfalls der vorbestimmten zeitlichen Verzögerung unterworfenes Stopsignal wieder angehalten wird und daß der so gewonnene Korrekturwert von dem vorausgehend gewonnenen Zeitmeßwert subtrahiert wird.

Durch diese Maßnahmen wird also zunächst die Zeitspanne, während derer die Zeit/Amplituden-Wandlerschaltung bei jeder Zeitabstandsmessung und auch bei jeder Eichmessung arbeitet, um einen vorgegebenen Zeitraum verlängert, der so gewählt ist, daß er mit Sicherheit größer ist als der Zeitraum, während dessen die Amplitude des Ausgangssignals der Zeit/Amplituden-Wandlerschaltung in nichtlinearer Weise anwächst. Sofort nachdem der so gewonnene Meßwert zwischengespeichert ist, wird die Zeit/Amplituden-Wandlerschaltung auf den Ausgangszustand zurückgesetzt und dann durch ein intern erzeugtes Startsignal neu gestartet. Gleichzeitig mit diesem Startsignal wird auch ein Stopsignal intern erzeugt und der Zeit/Amplituden-Wandlerschaltung auf dem gleichen Weg zugeführt, auf dem sie bei den eigentlichen Zeitmessungen das von der Oszillatorimpulsflanke herrührende Stopsignal erhält.

Dieses gleichzeitig mit dem intern erzeugten Startsignal erzeugte Stopsignal erfährt also auch die oben erwähnte Verzögerung, so daß die Zeit/Amplituden-Wandlerschaltung trotz der gleichzeitigen Erzeugung der beiden Signale für einen Zeitraum arbeitet, der dieser Verzögerung (und eventuell zwischen Start- und Stopleitung vorhandenen Laufzeitunterschieden, die bei der eigentlichen Zeitmessung in gleicher Weise vorhanden sind) entspricht. Es wird somit ein Korrekturwert erzeugt, mit dessen Hilfe exakt die in der gerade vorausgegangenen Zeitmessung enthaltenen Laufzeitdifferenzen und Nichtlinearitäten erfaßt werden. Dieser Korrekturwert wird von dem noch zwischengespeicherten Zeitabstandsmeßwert oder Eich-Meßwert abgezogen. Die Differenz stellt einen Meßwert dar, wie man ihn mit einer ideal linear arbeitenden und ohne Laufzeitdifferenzen angesteuerten Zeit/Amplituden-Wandlerschaltung erhalten würde und ist somit für eine weitere Verarbeitung optimal geeignet. Da die Korrekturwerte immer sofort unmittelbar nach der zu korrigierenden Messung gewonnen werden, wird auch der Einfluß von an dieser Stelle eventuell auftretenden Langzeitdriften eliminiert.

Weiterhin ist gemäß einer besonders bevorzugten Ausführungsform vorgesehen, daß durch jeden Meßfühler aus den auf dem Markierungsträger angebrachten realen Markierungen ideale Marken abstrahiert und deren Zeitabstände gemessen werden.

Dies hat zur Folge, daß nicht nur keine besonderen Anforderungen an die Langzeit-Maßhaltigkeit des zur Herstellung des Markierungsträgers verwendeten Materials und an die Genauigkeit der winkelmäßigen Positionierung der auf dem Markierungsträger angebrachten Markierungen gestellt werden müssen, sondern daß auch die Breite und die konkrete geometrische Form dieser Markierungen sowie die Genauigkeit ihres radialen Verlaufes keine wesentliche, die Genauigkeit der Winkelmessung beeinflussende Rolle mehr spielen.

Dabei ist von besonderer Bedeutung, daß die Breite der realen Markierungen in Drehrichtung gesehen wesentlich größer gewählt werden kann, als dies nach dem Stand der Technik möglich, ist, ohne daß dadurch die Meßgenauigkeit des Verfahrens in irgendeiner Weise beeinträchtigt würde. Durch die größere Breite der Markierungen läßt sich vielmehr das Signal-Rausch-Verhältnis am Ausgang der Meßfühler erheblich verbessern, wodurch einerseits der zur Verarbeitung der Nutzsignale erforderliche schaltungstechnische Aufwand wesentlich verringerbar ist und zum anderen die Meßgenauigkeit noch weiter gesteigert werden kann.

Vorteilhafterweise erfolgt die Abstrahierung der idealen Marken aus den realen Markierungen dadurch, daß der Durchgang eines aus dem vom Meßfühler beim Vorbeilaufen einer Markierung abgegebenen Signal abgeleiteten elektrischen Signals durch einen vorgegebenen konstanten Spannungspegel als ideale Marke dient, wobei bevorzugt als Meßfühler jeweils ein Differential-Fotoempfänger mit wenigstens einem nachgeschalteten differenzbildenden Glied Verwendung findet und der Null-Durchgang des vom differenzbildenden Glied beim Vorbeilaufen einer Markierung am Differential-Fotoempfänger erzeugten Ausgangssignals als ideale Marke dient.

Als Differential-Fotoempfänger kann eine Differential-Fotodiode verwendet werden, deren lichtempfindliche Fläche durch einen bzw. zwei Trennstege in zwei Hälften bzw. vier Quadranten unterteilt ist.

Im ersten Fall wird die Fotodiode so angeordnet, daß ihr Trennsteg bezüglich der Drehachse des Markierungsträgers in etwa radial verläuft. Zur Signalverarbeitung ist der Fotodiode nur ein differenzbildendes Glied, vorzugsweise ein Differenzverstärker nachgeschaltet, dessen beide Eingänge jeweils mit einer der beiden Hälften der lichtempfindlichen Fläche verbunden sind. Beim Vorbeilaufen einer jeden Markierung liefert das differenzbildende Glied jeweils ein Ausgangssignal, dessen Nulldurchgang in zumindest kurzfristig exakt reproduzierbarer Weise eine Art "optische Schwerlinie" der realen Markierung definiert und somit ausgezeichnet als ideale, zeitlich praktisch "punktförmige" Marke geeignet ist. Zwar ist es möglich, daß die so gebildeten "Markierungsschwerlinien" aufgrund von Drifterscheinungen beispielsweise der Lichtempfindlichkeit der Fotodiode über längere Zeiträume hinweg gesehen ihre gegenseitigen Winkelabstände geringfügig ändern. Durch die ständig erfolgende Nacheichung bleibt dies aber ohne Bedeutung.

Im zweiten Fall ist die Fotodiode so angeordnet, daß der eine der beiden Trennstege wieder in etwa in radialer Richtung verläuft, während sich der andere etwa tangential zu der vom Meßfühler bezüglich des Markierungsträgers bei dessen Drehung beschriebenen Bahn erstreckt. Zur Verarbeitung der bei dieser Anordnung beim Vorbeilaufen einer Markierung entstehenden vier Signale werden zwei differenzbildende Glieder verwendet, die so angeschlossen sind, daß ihre beiden Eingänge jeweils die Signale von zwei einander bezüglich des Schnittpunktes der Trennstege gegenüberliegenden Quadranten der lichtempfindlichen Fläche erhalten. Bei einer solchen Anordnung sind die von den beiden differenzbildenden Gliedern beim Vorbeilaufen einer Markierung abgegebenen Signale bzw. deren Nulldurchgänge zeitlich gegeneinander versetzt, wenn die Randlinien der Markierung nicht genau symmetrisch zu dem sich radial erstreckenden Trennsteg der Fotodiode verlaufen. Aus einer Änderung des Zeitabstandes dieser beiden jeweils zu einer Markierung gehörenden Signale kann das Ausmaß einer aufgetretenen radialen Relativverschiebung zwischen Meßfühler und Markierungsträger ermittelt und beispielsweise bei Überschreiten einer vorgegebenen Toleranzgrenze automatisch eine Nacheichung des Systems durchgeführt werden. Auch das Auftreten von Exzentrizitäten läßt sich mit dieser Anordnung erkennen.

Vorteilhafterweise ist vorgesehen, daß für jedes von dem differenzbildenen Glied beim Vorbeilaufen einer Markierung am Differential-Fotoempfänger abgegebene Ausgangssignal ein Rechtecksimpuls erzeugt wird, dessen wenigstens eine Flanke in einem festen zeitlichen Abstand zum Null-Durchgang des Ausgangssignals liegt, und daß die Zeitabstände dieser Flanken gemessen und weiter verarbeitet werden. Die von dem aus Meßfühler, differenzbildendem Glied und nachfolgender Pufferschaltung bestehenden Geber abgegebenen Rechtecksimpulse können beispielsweise in ihrer Flankensteilheit und Amplitude so ausgebildet sein, daß sie zur Ansteuerung der handelsüblichen TTL-IC-Digitalbausteine geeignet sind, wodurch sich die nachfolgende Auswerteschaltung besonders kostengünstig aufbauen läßt. Es können aber auch andere diskrete oder integrierte Schaltungsbauteile zur weiteren Signalverarbeitung herangezogen werden. Wesentlich ist allein die strenge zeitliche Zuordnung eines eindeutig erfaßbaren Teils, beispielsweise der steigenden Flanke des vom Geber beim Vorbeilaufen einer Markierung am Meßfühler erzeugten Signals zu dieser Markierung, so daß tatsächlich der zeitliche Abstand dieser Signalteile als Maß für den Winkelabstand der Markierungen verwendet werden kann.

Eine zur Lösung der der Erfindung zugrundeliegenden Aufgabe geeignete Vorrichtung wird durch die im Anspruch 24 zusammengefaßten Merkmale beschrieben. Auf die Funktion und Bedeutung der einzelnen Bestandteile dieser und der durch die Ansprüche 25 und 26 definierten Vorrichtung wurde bereits im Zusammenhang mit der Schilderung des erfindungsgemäßen Verfahrens ausführlich eingegangen. Es sei hier lediglich darauf hingewiesen, daß diese im wesentlichen von elektronischen Schaltungen gebildeten Bestandteile nicht notwendigerweise individuell nebeneinander vorhanden sein müssen, sondern schaltungsmäßig zusammengefaßt sein können. So ist es z. B. möglich, die Identifizierungsschaltung, die Steuerschaltung und die Vergleichsschaltung mit den Rechenschaltungen zu einem einzigen Rechner zusammenzufassen, der der Reihe nach oder parallel die entsprechenden Funktionen ausübt. Derartige Rechner stehen zum Beispiel in Form von Mikroprozessoren zu niedrigen Preisen zur Verfügung, so daß ihre Verwendung dem durch die Erfindung angestrebten Ziel, nämlich der Schaffung einer äußerst genau arbeitenden und dennoch kostengünstigen Winkel-Meßvorrichtung in keiner Weise entgegensteht.

Bei einer bevorzugten Ausführungsform umfaßt die Zeitmeßeinheit einen quarzgesteuerten Oszillator, einen die Oszillatorperioden abzählenden Zähler und zwei jeweils durch die vom zugehörigen Geber abgegebenen Signale triggerbare und durch vom Quarzoszillator abgegebenen Signale anhaltbare Zeit/Amplituden-Wandlerschaltungen mit nachgeschalteten Analog/Digital-Wandlern.

Da es erforderlich ist, für einen zeitlich und funktionsmäßig richtigen Ablauf der einzelnen Zeitmessungen zu sorgen, umfaßt die Zeitmeßeinheit darüber hinaus auch noch eine Ablaufsteuerung, die entweder gesondert aufgebaut oder mit in die z. B. durch einen Mikroprozessor realisierte Ablaufsteuerung des gesamten Meßsystems integriert sein kann.

Wesentlich ist, daß eine Ablaufsteuerung vorhanden ist, die die erwähnten Funktionen übernimmt und gegebenenfalls darüber hinaus dafür sorgt, daß zwischen den Zeitfeinmessungen die Zeit/Amplituden-Wandlerschaltungen mit Hilfe des Oszillators immer wieder nachgeeicht werden, und daß sowohl nach jeder Zeitfeinmessung als auch nach jeder Eichmessung die oben bereits beschriebenen Korrekturwerte gewonnen und in der erforderlichen Weise verarbeitet werden.

Zwar ist es möglich, die von jeder Zeit/Amplituden-Wandlerschaltung abgegebenen analogen Meß- und Korrekturwerte jeweils für sich zu digitalisieren und erst dann weiter zu verarbeiten. Bevorzugt ist jedoch vorgesehen, daß sie mit Hilfe von Sample-and-Hold-Schaltungen zunächst in analoger Form zwischengespeichert, durch einen Differenzverstärker voneinander subtrahiert und erst dann einem Analog/Digital-Wandler zugeführt werden.

Wie bereits erwähnt, erlaubt es das beschriebene Verfahren, anstelle der auf dem Markierungsträger vorhandenen realen Markierungen aus diesen abstrahierte ideale, d.h. zeitlich praktisch punktförmige Marken zu verwenden und deren Zeitabstände auszumessen und weiterzuverarbeiten. Das hat unmittelbar zur Folge, daß es anders als beim Stand der Technik nicht mehr erforderlich ist, an die geometrische Gestalt der Markierungen besondere Anforderungen zu stellen. Insbesondere müssen die Markierungen nicht mehr in Drehrichtung so extrem schmal ausgebildet werden wie bisher; vielmehr wird es bevorzugt, daß die Markierungen einer jeden Markierungsgruppe sich hinsichtlich ihrer optischen Eigenschaften von den an sie angrenzenden Bereichen des Markierungsträgers unterscheidende, im wesentlichen senkrecht zur Richtung der Drehung des Markierungsträgers verlaufende Streifen sind, wobei sich besonders gut zu verarbeitende elektrische Signale ergeben, wenn die Breite eines jeden Markierungsstreifens größer als die Breite des Trennsteges der Differential-Fotodiode und kleiner als die Breite der Differential-Fotodiode ist. Die streifenförmige Ausbildung der Markierungen führt zu einem wesentlich verbesserten Signal-Rauschverhältnis am Meßfühlerausgang, da sich aufgrund der größeren Markierungsbreite ein wesentlich stärkerer optischer Kontrast zwischen den Markierungen und den sie umgebenden Bereichen des Markierungsträgers erzielen läßt.

Die Abtastung des Markierungsträgers durch den Meßfühler kann entweder im Auflichtverfahren oder im Durchlichtverfahren erfolgen. In jedem Fall ist dafür zu sorgen, daß das von der Lichtquelle ausgehende Meßlichtbündel möglichst senkrecht auf die Oberfläche des Markierungsträgers auffällt, was beim Auflichtverfahren zur Folge hat, daß das reflektierte Licht auf dem Weg des auffallenden Lichtes zurückläuft. Da sich Lichtquelle und Lichtempfänger nicht an derselben Stelle befinden können, wird zur Auskoppelung des reflektierten Lichtes ein Strahlenteiler, beispielsweise ein halbdurchlässiger Spiegel verwendet.

Um eine möglichst günstige Ausleuchtung des den Meßfühler bildenden Fotoempfängers zu erzielen, ist es zweckmäßig, die Lichtaustrittsöffnung der Beleuchtungsanordnung möglichst nah am Markierungsträger anzuordnen. Dies kann entweder dadurch geschehen, daß man die Lichtquelle eventuell unter Verwendung einer Abbildungs- bzw. Kondensoroptik möglichst nah am Markierungsträger anordnet. In Fällen, in denen dies beispielsweise aus Gründen des zur Verfügung stehenden Raumes nicht möglich ist, ist bevorzugt, daß ein das Licht der Lichtquelle in unmittelbare Nähe des Markierungsträgers lenkender Lichtleiter vorgesehen ist. Dieser Lichtleiter kann überdies vorteilhafterweise dazu verwendet werden, das von der Lichtquelle ausgehende Licht zu homogenisieren. Nicht nur Glühlampen, sondern auch die bevorzugt als Lichtquelle eingesetzten Licht emittierenden Dioden (LED's oder Laserdioden) besitzen nämlich eine Struktur, die dazu führt, daß das Licht nicht punktförmig sondern flächig abgestrahlt wird, wobei die einzelnen Punkte dieser Fläche mit stark unterschiedlicher Helligkeit leuchten. Der zwischen Lichtquelle und Markierungsträger angeordnete Lichtleiter vermag hier eine Kondensorfunktion auszuüben, d.h. seine dem Markierungsträger zugewandte Stirnfläche erscheint als weitgehend homogen leuchtende Fläche, mit deren Hilfe die lichtempfindliche Fläche der den Meßfühler bildenden Fotodiode gleichmäßig ausgeleuchtet werden kann.

Die Erfindung wird im folgenden anhand von Ausführungsbeispielen unter Bezugnahme auf die Zeichnung beschrieben; in dieser zeigt:

Fig. 1 eine schematische Darstellung einer erfindungsgemäßen Meßvorrichtung,

Fig. 2 einen vergrößerten Ausschnitt aus einem Markierungsträger,

Fig. 3 eine schaltplanmäßige Darstellung eines einem Meßfühler nachgeschalteten Gebers,

Fig. 4 ein Diagramm, das die an verschiedenen Stellen des Gebers auftretenden elektrischen Signale wiedergibt,

Fig. 5 ein schematisches Blockdiagramm einer bevorzugten Zeitmeßeinrichtung,

Fig. 6 und 7 das Arbeiten dieser Zeitmeßeinrichtung veranschaulichende Signal-Diagramme, und

Fig. 8 eine weitere Ausführungsform eines beim erfindungsgemäßen Verfahren verwendbaren Markierungsträgers.

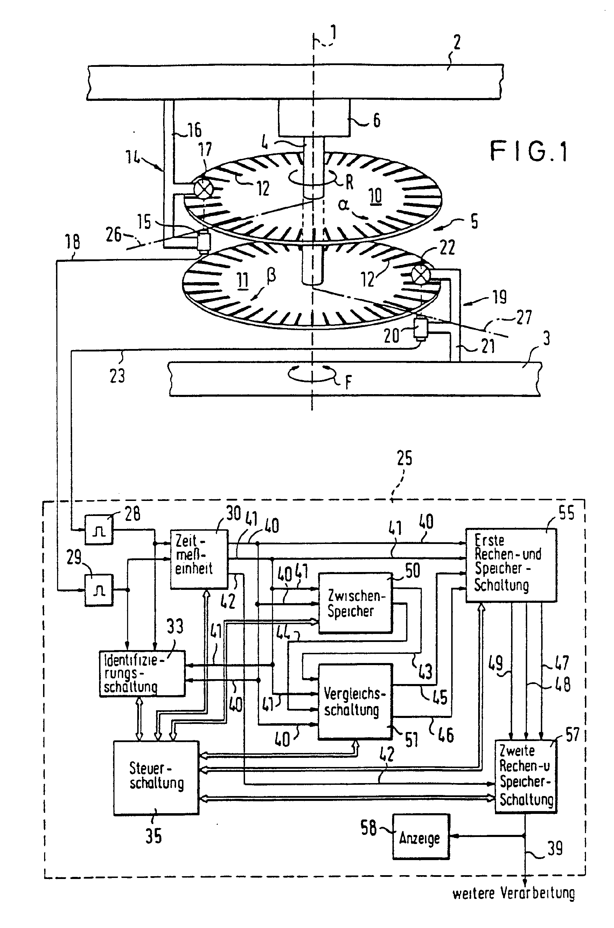

Fig. 1 zeigt die beiden um eine Drehachse 1 gegeneinander in Richtung des Pfeiles F verdrehbaren Körper 2 und 3, deren jeweiliger momentaner Winkelabstand gemessen werden soll.

Der eine Körper 2 trägt den vermittels einer mit der Drehachse 1 ausgerichteten Welle 4 drehbar gelagerten Markierungsträger 5, der durch einen ebenfalls am Körper 2 befestigten Antrieb 6, der entweder direkt ein Elektromotor oder aber ein Getriebe oder eine sonstige Antriebsvorrichtung sein kann, zu einer ständigen Rotation in Richtung des Pfeiles R angetrieben wird.

Der Markierungsträger 5 besteht im wesentlichen aus zwei an der Welle 4 axial voneinander beabstandet befestigten, kreisförmigen Scheiben 10 und 11, durch deren jeweiligen Mittelpunkt hindurch in etwa die Welle 4 verläuft. Längs des Randes einer jeden Scheibe 10, 11 sind in etwa radial verlaufende und in Drehrichtung voneinander beabstandete, streifenförmige Markierungen 12 angeordnet, die sich bei dem dargestellten Ausführungsbeispiel hinsichtlich der Lichtdurchlässigkeit von den sie umgebenden Bereichen der jeweiligen Scheibe 10 bzw. 11 unterscheiden. Die auf der Scheibe 10 angeordneten Markierungen 12 bilden eine erste Markierungsgruppe $\alpha$, die von der auf der Scheibe 11 angeordneten zweiten Markierungsgruppe $\beta$ räumlich getrennt angeordnet ist. Es ist nicht erforderlich, daß zwischen den Markierungsgruppen $\alpha$ und $\beta$ irgendeine spezielle, fest vorgegebene Winkelbeziehung besteht. Da im Rahmen des vorliegenden Verfahrens die auf den willkürlich wählbaren Nullpunkt der Winkelmessung bezogenen Meßwinkelabstände der zur Gruppe $\alpha$ gehörenden Markierungen 12 von den zur Gruppe $\beta$ gehörenden Markierungen 12 durch entsprechende Zeitabstandsmessungen ermittelt werden, können die Scheiben 10 und 11 in einer beliebigen gegenseitigen Winkelstellung an der Welle 4 befestigt sein.

Auch die Drehgeschwindigkeit, mit der der Antrieb 6 den Markierungsträger 5 in Rotation versetzt, ist in keiner Weise kritisch und es müssen keine speziellen Maßnahmen zu ihrer Stabilisierung ergriffen werden. Zwar geht aufgrund der Tatsache, daß die interessierenden Winkel durch Zeitabstandsmessungen bestimmt werden, die Drehgeschwindigkeit des Markierungsträgers wesentlich mit in die Messungen ein, doch wird sie im Rahmen des vorliegenden Verfahrens ununterbrochen mit sehr großer Genauigkeit und mit sehr hohem zeitlichen Auflösungsvermögen gemessen, so daß sowohl kurz- als auch langfristige Schwankungen der Drehgeschwindigkeit immer sofort erfaßt und berücksichtigt werden können.

An dem einen der beiden Körper 2 ist weiterhin eine erste, die Scheibe 10 des Markierungsträgers 5 abtastende Abtastvorrichtung 14 befestigt, die im wesentlichen aus einem Träger 16, einer oberhalb der einen Flachseite der Scheibe 10 angeordneten Lichtquelle 17 und einem als Fotodetektor ausgebildeten Sensor 15 besteht, der auf der gegenüberliegenden Seite der Markierungsscheibe 10 so angeordnet ist, daß die Verbindungslinie zwischen Lichtquelle 17 und Fotodetektor 15 in etwa senkrecht auf der die Markierungen 12 tragenden Oberfläche der Skalenscheibe 10 steht.

Durch die in Richtung des Pfeiles R erfolgende Drehung der Welle 4 laufen also in ständigem Wechsel lichtundurchlässige Markierungen 12 und lichtdurchlässige Markierungszwischenräume durch das Meßlichtbündel hindurch, das auf diese Weise moduliert wird.

Als Lichtquelle 17 findet bevorzugt eine Licht emittierende Diode Verwendung, bei der es sich entweder um eine LED oder um eine Laser-Diode handeln kann.

Der opto-elektrische Meßfühler 15 gibt über die Leitung 18 an eine Meß- und Auswerteschaltung 25 jedesmal dann ein elektrisches Signal ab, wenn an ihm eine der Markierungen 12 der Markierungsgruppe $\alpha$ vorbeiläuft.

An dem zweiten Körper 3 ist eine die zweite Skalenscheibe 11 des Markierungsträgers 5 abtastende Abtastvorrichtung 19 befestigt, die in der gleichen Weise aufgebaut ist, wie die Abtastvorrichtung 14 und einen opto-elektrischen Sensor 20, sowie eine vorzugsweise als Licht emittierende Diode ausgebildete Lichtquelle 22 umfaßt, die von einem Träger 21 gehalten werden. Die vom opto-elektrischen Sensor 20 beim Vorbeilaufen der Markierungen 12 der Markierungsgruppe $\beta$ abgegebenen Signale werden der Meß- und Auswerteschaltung 25 über eine Leitung 23 zugeführt.

Ausgehend von der Drehachse 1 läßt sich durch jeden der beiden Meßfühler 15 und 20 ein strichpunktiert wiedergegebener Radialstrahl 26 bzw. 27 legen, und es ist im Grunde genommen der von diesen beiden Radialstrahlen 26 und 27 bezüglich der Achse 1 eingeschlossene Winkel, der mit Hilfe des erfindungsgemäßen Verfahrens bzw. der erfindungsgemäßen Vorrichtung gemessen wird. Allerdings ist es nicht erforderlich, den Nullpunkt dieser Winkelmessung dadurch zu definieren, daß die beiden Radialstrahlen 26 und 27 in der in Richtung der Achse 1 durchgeführten Projektion genau zur Deckung kommen. Vielmehr ist dieser Nullpunkt völlig frei wählbar, so daß die Vorrichtung beispielsweise unmittelbar den Winkel zwischen zwei sich bei der Drehbewegung der beiden Körper 2, 3 in Richtung des Pfeiles F in der in Richtung der Achse 1 erfolgenden Projektion aufeinander zu- bzw. voneinander weg bewegenden Kanten der Körper 2, 3 mißt und direkt anzeigt.

Als mit den Leitungen 18 bzw. 23 verbundene Eingangsglieder umfaßt die Meß- und Auswerteschaltung 25 zwei Geber 28 bzw. 29, die nicht nur zur Formung der Meßfühlersignale sondern auch dazu dienen, aus den realen, auf dem Markierungsträger 5 befindlichen Markierungen 12 ideale, d.h. zeitlich praktisch punktförmige Marken zu gewinnen, deren Zeitabstände dann durch die den Gebern 28 und 29 nachgeschaltete Zeitmeßeinheit 30 sehr genau ausgemessen werden können.

Weiterhin umfaßt die Meß- und Auswerteschaltung 25 eine Identifizierungsschaltung 33, die erkennt, welche Markierung 12 der Gruppe $\alpha$ bzw. $\beta$ gerade am Meßfühler 15 bzw. 20 vorbeiläuft. Diese Identifizierung kann mit Hilfe der von der Zeitmeßeinheit 30 für das der jeweiligen Markierung unmittelbar vorausgehende Markierungspaar gemessenen Zeitabstände bzw. des Quotienten der Zeitabstände der unmittelbar vorausgehenden Markierungspaare und/oder durch Abzählen der unmittelbar von den Gebern 28 bzw. 29 kommenden Signale erfolgen. Die Identifizierungsschaltung 33 liefert die jeweiligen Markierungen individualisierende Informationen an eine Steuerschaltung 35, die nach einem vorgebbaren Programm zentral die Funktionsabläufe in der gesamten Meß- und Auswerteschaltung steuert. Da dieser Steuerschaltung 35 zur einwandfreien Durchführung ihrer Aufgaben auch Informationen über den jeweiligen Arbeitszustand der übrigen Schaltungsbestandteile zufließen müssen, ist sie mit diesen durch in beiden Richtungen arbeitende Übertragungsleitungen verbunden, was in Fig. 1 durch an beiden Enden mit Pfeilen versehene Doppellinien symbolisiert ist.

Die Zeitmeßeinheit 30 besitzt gemäß Fig. 1 im wesentlichen drei Signal-Ausgangsleitungen 40, 41 und 42, von denen die beiden ersten 40 und 41 jeweils mit einem entsprechenden Eingang der Identifizierungsschaltung 33, eines Zwischenspeichers 50, einer Vergleichsschaltung 51 und einer ersten Rechen- und Speicherschaltung 55 verbunden sind. Auf diesen Leitungen 40 und 41 gibt die Zeitmeßeinheit 30 die Zeitabstandsmeßwerte $\Delta T_{\alpha\mu}$ bzw. $\Delta T_{\beta\nu}$ ab, die sie für die unmittelbar aufeinanderfolgenden, identifizierten Markierungen 12 der Gruppe $\alpha$

13

bzw. β zugeordneten Signale der Geber 28 bzw. 29 ermittelt hat.

Beim Eichlauf werden diese Zeitabstandsmeßwerte $\Delta T_{\alpha\mu}$ und $\Delta T_{\beta\nu}$ zunächst für eine beliebig herausgegriffene Umdrehung des Markierungsträgers 5 gemessen und unter Beibehaltung ihrer Zuordnung zu den zugehörigen Markierungen und Markierungsgruppen α bzw. β im Zwischenspeicher 50 gespeichert.

Bei der nächsten Umdrehung gibt der Zwischenspeicher 50 diese Werte in der Reihenfolge auf den Leitungen 43 und 44 an die Vergleichsschaltungen 51 ab, in der die zugehörigen neuen Werte auf den Leitungen 40 und 41 erscheinen. Stimmen die jeweils von den zwei aufeinanderfolgenden Umdrehungen stammenden Wertepaare innerhalb vorgegebener Toleranzgrenzen miteinander überein, was ein Kennzeichen dafür ist, daß die Drehgeschwindigkeit des Markierungsträgers 5 in diesem Zeitraum konstant ist, so gibt die Vergleichsschaltung auf den Leitungen 46 und 45 Signale an die erste Rechen- und Speicherschaltung 55, die diese veranlassen, die auf den Leitungen 40 und 41 auch ihr zugeführten neuen Zeitabstandsmeßwerte zur Berechnung von längerfristig zu speichernden Eichwerten heranzuziehen und aus den von der Zeitmeßeinheit 30 während dieser beiden Umdrehungen ebenfalls gelieferten Zeitabstandsmeßwerten für von jeweils ein und derselben Markierung an einem der Meßfühler 15 bzw. 20 erzeugten und somit einer 360°-Drehung des Markierungstragers 5 entsprechenden Signalen die während der beiden Eichlaufumdrehungen als konstant festgestellte Drehgeschwindigkeit zu berechnen.

Sobald für wenigstens eine der beiden Markierungsgruppen α oder β ein kompletter Satz von Eichwerten für die absoluten Winkelabstände ihrer Markierungen in der ersten Rechen- und Speicherschaltung 55 enthalten ist, kann diese fortlaufend aus jedem von der Zeitmeßeinheit 30 neu erzeugten Zeitabstandsmeßwert für diese Markierungsgruppe die momentane Drehgeschwindigkeit ω(t) des Markierungsträgers 5 unabhängig davon berechnen, ob die Vergleichsschaltung eine Übereinstimmung mit dem zugehörigen von der vorausgehenden Umdrehung stammenden Wert anzeigt oder nicht.

Die so erhaltene momentane Drehgeschwindigkeit ω(t), die während einer Umdrehung des Markierungsträgers 5 so viele Male neu bestimmt werden kann, wie Markierungen in der betreffenden Markierungsgruppe enthalten sind, wird von der ersten Rechen- und Speicherschaltung 55 über die Leitung 47 der zweiten Rechen- und Speicherschaltung 57 zugeführt.

Diese zweite Rechen- und Speicherschaltung 57 erhält außerdem über die Leitungen 49 und 48 die die Winkelabstände innerhalb einer jeden Markierungsgruppe α bzw. β betreffenden Eichwerte von der ersten Rechen- und Speicherschaltung 55 und über die Leitung 42 von der Zeitmeßeinheit 30 Zeitabstandsmeßwerte $\Delta\theta_{\mu\nu}$ für die von in den verschiedenen Gruppen α und β enthaltenen Markierungen stammenden Signale.

Aus diesen "gemischten" Zeitabständen $\Delta\theta_{\mu\nu}$ berechnet und speichert die zweite Rechen- und Speicherschaltung 57 zunächst aufgrund eines ihr bei einer willkürlich als Null-Stellung ausgewählten Winkelstellung der beiden Körper 2 und 3 bzw. der Radialstrahlen 26 und 27 zugeführten Befehlssignals unter Heranziehung der über die Leitungen 49 und 48 erhaltenen Eichwerte und der auf der Leitung 47 erhaltenen momentanen Winkelgeschwindigkeit ω(t) des Markierungsträgers 5 eine Vielzahl von auf diesen Nullpunkt der Winkelmessung bezogenen, Meßwinkelabständen $\varphi_{\mu\nu}$, von identifizierten Markierungen μ und ν, von denen immer die eine der einen Gruppe α und die andere der anderen Gruppe β angehört.

Ist diese die winkelmäßige, nullpunktsbezogene Korrelation zwischen den beiden Markierungsgruppen α und β herstellende Wertetafel fertig, so kann die Rechen- und Speicherschaltung 57 aus jedem neu gewonnenen Zeitabstand $\Delta\theta_{\mu,\nu}(t)$, der zugehörigen momentanen Winkelgeschwindigkeit ω(t) des Markierungsträgers 5 und dem gespeicherten Meßwinkelabstand $\varphi_{\mu\nu}$, die momentane Winkellage φ(t) zwischen den beiden Körpern berechnen und über die Leitung 39 einer Anzeigeeinheit 58 und/oder einer weiteren Verarbeitung zuführen, wenn überprüft worden ist, ob die Winkelgeschwindigkeit ω (t) des Markierungsträgers während der Messung von $\Delta\theta_{\mu,\nu}(t)$ konstant war.

Da alle für die Berechnung von φ(t) verwendeten Größen aus Zeitabstandsmessungen gewonnen wurden, bestimmt die Winkelmeßvorrichtung den gesuchten Winkel mit der Genauigkeit und dem Auflösungsvermögen der in ihr enthaltenen Zeitmeßeinheit 30.

Es sei hier noch darauf hingewiesen, daß die Signalübertragung zwischen den in Fig. 1 dargestellten Blöcken der Meß- und Auswerteschaltung 25 nicht nur seriell sondern auch parallel oder einer gemischten Form erfolgen kann. In den beiden letzteren Fällen umfassen dann auch die mit einfachen Strichen wiedergegebenen Verbindungen mehrere parallele Übertragungsleitungen.

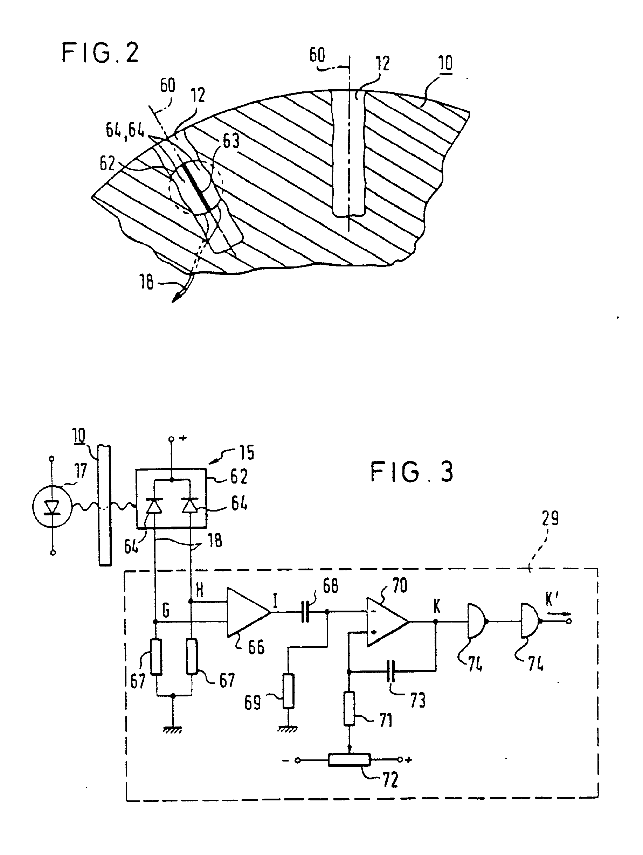

Bevor im folgenden genauer auf den Aufbau und die Funktion der Zeitmeßeinheit 30 eingegangen wird, soll zunächst noch anhand der Figuren 2 bis 4 das Zusammenwirken zwischen den Markierungsscheiben 10 bzw. 11 mit den zugehörigen Meßfühlern 15 bzw. 20 und der Aufbau und die Arbeitsweise der die Signale dieser Meßfühler formenden Geber 28 und 29 beschrieben werden. Da der prinzipielle Aufbau der Markierungsscheiben 10 und 11 und der zugehörigen Meßfühler- und Geberanordnungen 15, 29 bzw. 20, 28 identisch ist, sollen hierfür nur die Markierungsscheibe 10, ihr zugehöriger Meßfühler 15 und der diesem nachgeschaltete Geber 29 betrachtet werden.

In Fig. 2 ist ein zwei Markierungen umfassender Ausschnitt einer Skalenscheibe 10 wiedergegeben, bei der anders als in Fig. 1 die große Fläche der Scheibe lichtundurchlässig ist, so daß das von der Lichtquelle ausgehende Meßlichtbündel nur dann zum Meßfühler zu gelangen vermag, wenn eine Markierung 12 am Meßfühler vorbeiläuft. Dieser Meßfühler besteht gemäß Fig. 2 im wesentlichen aus einer Differential-Fotodiode 62, deren lichtempfindliche Flächen 64, 64 durch einen schmalen Steg 63 voneinander getrennt sind. Wie der Fig. 2 deutlich zu entnehmen ist, kommt es nicht darauf an, daß die Markierungsstreifen 12 eine besonders genau definierte geometrische Form besitzen, da aus ihnen mit Hilfe der Differential-Fotodiode 62 und des im folgenden unter Bezugnahme auf Fig. 3 ausführlicher beschriebenen Gebers eine ideale Marke abstrahiert wird, die in Fig. 2 jeweils durch die strichpunktierten Linien 60 symbolisiert wird. Wie Fig. 2 ebenfalls zeigt, umfaßt bei Verwendung einer Differential-Fotodiode 62 die Leitung 18 zwei voneinander isolierte Adern, die gemäß Fig. 3 einerseits jeweils an einen der beiden Eingänge eines Differenzverstärkers 66 angeschlossen und andererseits über Lastwiderstände 67 mit der Systemmasse verbunden sind.

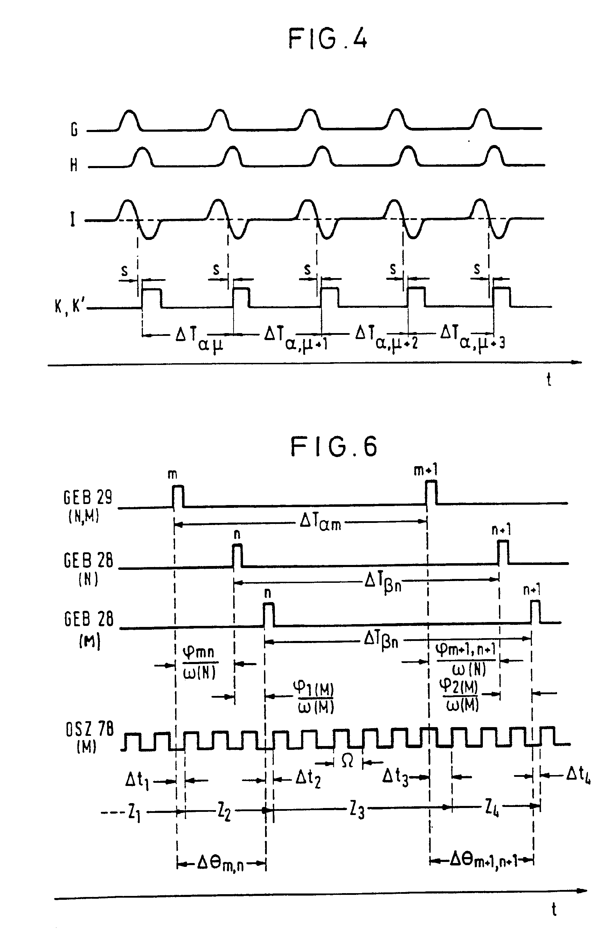

Bei einer besonders bevorzugten Ausführungsform ist vorgesehen, daß in jede der von den lichtempfindlichen Flächen 64, 64 der Differential-Fotodiode 62 zu einem der Eingänge des Differenzverstärkers 66 führende Leitung ein in Fig. 3 nicht dargestellter Verstärker mit hohem Verstärkungsfaktor eingeschaltet ist, um die von den lichtempfindlichen Flächen der Fotodiode abgegebenen Signale vor der Differenzbildung vorzuverstärken. Dadurch läßt sich erreichen, daß das in Fig. 4 in der dritten Zeile von oben wiedergegebene Ausgangssignal des Differenzverstärkers 66 einen sehr steilen und damit zeitlich exakt festliegenden und präzise detektierbaren Nulldurchgang aufweist.

Der Ausgang des Differenzverstärkers 66 ist zur gleichspannungsmäßigen Entkopplung über einen Kondensator 68 an den über einen Widerstand 69 mit der Systemmasse verbundenen negativen Eingang eines Komparators 70 gelegt. Der positive Eingang des Komparators 70 ist über einen Widerstand 71 mit einer vereinfacht als Potentiometer 72 dargestellten, einstellbaren stabilisierten Spannungsquelle verbunden, die das zur Erkennung des Null-Durchganges des vom Differenzverstärker 66 abgegebenen Ausgangssignals erforderliche Referenzpotential liefert. Der Ausgang des Komparators 70 ist einerseits mit dem Eingang des ersten von zwei als Puffer dienenden Invertern 74 verbunden und andererseits über einen Kondensator 73 zur Erzeugung einer definierten Hysterese auf den positiven Eingang des Komparators 70 rückgekoppelt. Bei den Invertern 74 kann es sich beispielsweise um TTL-Bausteine handeln, die dazu dienen, das vom Komparator 70 abgegebene Signal so zu formen, daß es ohne weiteres in die nachfolgenden Schaltungseinheiten eingespeist werden kann.

Die Arbeitsweise des in Fig. 3 dargestellten Gebers soll nun anhand der Fig. 4 erläutert werden, in der über einer Zeitachse die Signale wiedergegeben sind, die an den Punkten G bis K' der Geberschaltung 29 auftreten, wenn am Meßfühler 15 eine Reihe von Markierungen vorbeiläuft.

Jedesmal, wenn das Meßlichtbündel durch eine Markierung 12 unterbrochen, bzw. bei der Ausführungsform nach Fig. 2 durchgelassen wird, entsteht an den Punkten G und H eine Halbwelle, wobei das Signal am Punkt G gegen das Signal am Punkt H zeitlich versetzt ist, da die Differential-Fotodiode 62 so angeordnet ist, daß ihr Trennsteg 63 sich in etwa in radialer Richtung bezüglich der Drehachse der Markierungsscheibe 10 erstreckt, so daß zuerst die eine und dann die andere der beiden lichtempfindlichen Flächen 64, 64 der Diode 62 von der Markierung überstrichen wird.

Aus den an den Punkten G und H auftretenden Halbwellen erzeugt der Differenzverstärker 66 das Signal I, das dann den in Fig. 4 wiedergegebenen steilen und somit eine ideale Marke bildenden Nulldurchgang aufweist, wenn die umfangsmäßige Breite der Markierungen 12 größer als die Breite des Trennsteges 63 und kleiner als der Durchmesser der Differential-Fotodiode 62 ist.

Erkannt wird der Nulldurchgang der Signale I mit Hilfe des Komparators 70, dem durch die Potentialquelle 72 ein entsprechender Vergleichspegel vorgegeben ist. Am Ausgang des Komparators 70 erscheinen die Rechtecksignale K, deren steigende Flanken sehr steil sind und in einem eindeutigen zeitlichen Zusammenhang mit den Nulldurchgängen der Signale I stehen. Die zwischen einem jeden solchen Nulldurchgang und der zugehörigen steigenden Impulsflanke auftretende zeitliche Verzögerung s ist in Fig. 4 sehr stark übertrieben dargestellt. Tatsächlich ist sie so klein, daß eventuell auftretende kurzzeitige Schwankungen dieser Verzögerung die Genauigkeit des Meßergebnisses nicht beeinflussen. Da dasselbe auch für die an den Puffer-Invertern 74 auftretenden Signalverzögerungen gilt, kann das am Ausgang des zweiten Inverters 74 auftretende Signal K' dem Signal K am Ausgang des Komparators gleichgesetzt werden. Die steigenden Flanken der Rechteckimpulse K' stellen also den optischen Schwerlinien 60 der Markierungsstreifen 12 eindeutig und zumindest kurzzeitig exakt reproduzierbar zugeordnete ideale Marken dar, deren Zeitabstände $\Delta T_{\alpha\mu}$ bei gegebener Winkelgeschwindigkeit des Markierungsträgers ein genaues Maß für die Absolutwerte der Winkelabstände dieser optischen Schwerlinien bilden. Sind umgekehrt diese absoluten Winkelabstände bekannt, so kann aus den Meßwerten $\Delta T_{\alpha\mu}$ die momentane Winkelgeschwindigkeit $\omega(t)$ des Markierungsträgers 5 sehr genau berechnet werden.

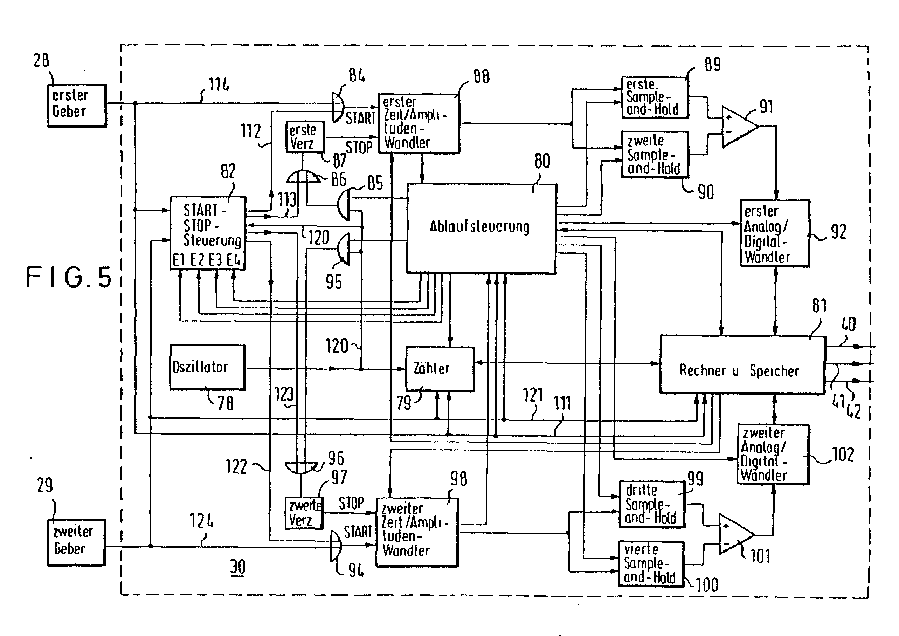

Eine zur hochgenauen Messung der Zeitabstände $\Delta T_{\alpha\mu}$, $\Delta T_{\beta\nu}$ und $\Delta\theta_{\mu\nu}$ bevorzugte Zeitmeßeinheit 30 ist in Fig. 5 schematisch dargestellt. Sie basiert auf dem Prinzip, daß einerseits zur Ermittlung von Zeit-Grobmeßwerten die Schwingungsperioden eines freilaufenden, quarzgesteuerten Oszillators 78 mit Hilfe eines Zählers 79 abgezählt werden. Da dies als alleiniges Meßverfahren entweder einen sehr hochfrequent schwingenden Oszillator erfordern oder aber nur zu relativ ungenauen Meßergebnissen führen würde, sind andererseits zusätzlich die zeitliche Lage der Signale, deren Zeitabstände bestimmt werden sollen, innerhalb einer Oszillatorperiode erfassende Messungen vorgesehen.

Wie sich aus den obigen Ausführungen ergibt, müssen dabei Zeitabstände sowohl zwischen Signalen gemessen werden, die alle jeweils an einem der Meßfühler auftreten, d.h. also zu Markierungen derselben Gruppe gehören, als auch zwischen Signalen, von denen jeweils das eine von dem einen Meßfühler 15 und das andere von dem anderen Meßfühler 20 stammt. Die Zeitabstände der ersten Art werden im vorliegenden Zusammenhang mit $\Delta T_{\alpha\mu}$ bzw. $\Delta T_{\beta\nu}$ bezeichnet, wobei der erste Index die zugehörige Markierungsgruppe kennzeichnet und der zweite ein Zählindex ist, während die Zeitabstände der zweiten Art mit $\Delta\theta_{\mu\nu}$ symbolisiert werden, wobei $\mu$ für die entsprechende, identifizierte Markierung der einen und $\nu$ für die zugehörige

identifizierte Markierung der anderen Gruppe steht.

Zur Erfassung der oben erwähnten Grobmeßwerte genügt es, einen die Schwingungsperioden des quarzgesteuerten Oszillators 78 (Fig. 5) abzählenden Zähler vorzusehen, aus dem unter Regie der Ablaufsteuerung 80 immer dann der nächste Zählwert in den Rechner und Speicher 81 ausgelesen wird, wenn einer der beiden Geber 28, 29 ein Signal abgibt.

Der Rechner und Speicher 81 ist über die Leitungen 111 und 121 ebenfalls mit den Gebern 28 und 29 verbunden und kann daher erkennen, ob der ausgelesene Zählwert zu einem Markierungssignal der α- oder der β-Gruppe gehört oder ob beide Geber 28, 29 innerhalb der vorausgehenden Oszillatorperiode ein Signal abgegeben haben. Der letztere Fall kann ja, wie bereits erwähnt, ohne weiteres auftreten, da die beiden Meßfühler 15 und 20 immer wieder Winkelstellungen einnehmen können, in denen an ihnen exakt oder nahezu gleichzeitig jeweils eine Markierung aus der Gruppe α bzw. β vorbeiläuft.

Dieser Umstand hat zur Folge, daß zur Ermittelung der Zeitfeinmeßwerte für jeden Geber 28, 29 eine eigene Zeit/Amplituden-Wandlerschaltung 88 bzw. 98 mit den zugehörigen Zusatzschaltungen vorgesehen wird, da eine Zeit/Amplituden-Wandlerschaltung alleine während des Ausmessens des Zeitabstandes eines beispielsweise vom Geber 28 stammenden Signals bis zur nächsten steigenden Oszillatorimpulsflanke und auch während einer darauffolgenden Totzeit nicht in der Lage ist, das Auftreten eines weiteren Signals am Geber 29 zu erkennen und dessen Zeitabstand bis zur nächsten Oszillatorimpulsflanke zu bestimmen.

Die Zeitmeßeinheit 30 umfaßt daher für die Zeitfeinmessungen zwei getrennte Kanäle, von denen jeder jeweils einem der beiden Meßfühler 15, 20 bzw. Geber 28, 29 nachgeschaltet ist. Da der Aufbau dieser beiden Feinzeitmeßkanäle identisch ist, genügt eine Beschreibung des dem Geber 28 nachgeschalteten Kanals. Bei dieser Beschreibung werden bei Bezugszeichenangaben die Bezugszeichen für die entsprechenden Schaltungseinheiten des zweiten Kanals in Klammern gesetzt hinzugefügt.

Die zur Erfassung der Zeit-Feinmeßwerte vorgesehene Zeit/Amplituden-Wandlerschaltung 88(98) umfaßt im wesentlichen einen Kondensator, der nach Triggerung durch ein START-Signal mit Hilfe einer Konstantstromquelle geladen wird, so daß die an ihm abfallende Spannung nach einer kurzen Anfangsphase mit der Zeit linear solange anwächst, bis der Aufladevorgang durch ein STOP-Signal beendet wird. Die Amplitude des nach dem STOP-Signal am Ausgang der Zeit/Amplituden-Wandlerschaltung anliegenden Signals stellt somit ein Maß für den zwischen dem START- und dem STOP-Signal verstrichenen Zeitraum dar.

Bei der Zeitmeßeinheit 30 gemäß Fig. 5 wird die Zeit/Amplituden-Wandlerschaltung 88(98) nun so eingesetzt, daß sie durch die vom Geber 28(29) über das ODER-Gatter 84(94) kommenden Signale gestartet und durch die nächste, hierauf folgende, steigende Flanke eines Oszillatorimpulses angehalten wird. Dieses STOP-Signal wird ihr unter Kontrolle der Ablaufsteuerung 80 über ein zur Ausblendung der nicht benötigten Oszillatorimpulse dienendes UND-Gatter 85(95) ein ODER-Gatter 86(96) und ein Verzögerungsglied 87(97) zugeführt, dessen Bedeutung weiter unten noch genauer erläutert wird.

Die Zeit/Amplituden-Wandlerschaltung 88(98) mißt also für jedes Geber-Signal mit hoher Genauigkeit die um einen konstanten, durch das Verzögerungsglied 87(97) vorgegebenen Wert τ verlängerte Zeit, die zwischen dem Auftreten der steigenden Flanke dieses Geber-Signals und der nächsten steigenden Impulsflanke des freilaufenden Oszillators vergeht.

Da der Zähler 79 den zugehörigen Grobmeßwert in digitaler Form liefert, ist es zweckmäßig, auch die analogen Ausgangssignalamplituden der Zeit/Amplituden-Wandlerschaltung 88(98) zu digitalisieren, was mit Hilfe des Analog/Digital-Wandlers 92(102) geschieht. Die Berechnung der interessierenden Zeitabstandsmeßwerte $\Delta T_{\alpha\mu}$, $\Delta T_{\beta\nu}$ bzw. $\Delta\theta_{\mu\nu}$ nimmt dann die Rechen- und Speicherschaltung 61 vor.

Die Ablaufsteuerung 80, die beispielsweise als Johnson-Zähler aufgebaut sein kann, übt neben der bereits erwähnten Steuerung der UND-Gatter 85 und 95 noch eine ganze Reihe von weiteren Funktionen aus, die im folgenden noch im Zusammenhang mit der Schilderung der übrigen Bestandteile der Zeitmeßeinheit 30 erläutert werden, soweit sie von wesentlicher Bedeutung sind.

Von den übrigen Bestandteilen der Zeitmeßeinheit 30 ist zunächst die START-STOP-Steuerung 82 zu nennen, die über die ODER-Gatter 84(94) bzw. 86(96) START- bzw. STOP-Signale an die entsprechenden Eingänge der Zeit/Amplituden-Wandlerschaltung 88(98) abgeben kann. Dabei lassen sich grundsätzlich zwei verschiedene Funktionsarten unterscheiden, je nach dem, ob mit Hilfe dieser intern erzeugten START-STOP-Signale die Zeit/Amplituden-Wandlerschaltung 88(98) durch Vergleich mit dem vom quarzgesteuerten Oszillator 78 gebildeten Frequenznormal nachgeeicht oder ob zur Eliminierung von Laufzeitunterschieden und Nichtlinearitäten ein Korrekturwert erzeugt werden soll.

Im ersten Fall erhält die START-STOP-Steuerung 82 von der Ablaufsteuerung 80 über den Eingang E1 (E3) ein Befehlssignal, worauf sie zunächst über die Leitung 112(122) ein START-Signal abgibt, das genau mit der ihr über die Leitung 120 zugeführten Oszillatorschwingung synchronisiert ist, beispielsweise genau mit der fallenden Flanke eines der vom quarzgesteuerten Oszillator 78 abgegebenen Rechtecksimpulse zusammenfällt. Beispielsweise eine Halbperiode der Oszillatorschwingung später, d.h. also bei der nächsten steigenden Impulsflanke liefert die Steuerung 82 dann ein STOP-Signal über die Leitung 113(123), so daß es möglich wird, den in der Zwischenzeit erzeugten Amplitudenwert des Ausgangssignals der Zeit/Amplituden-Wandlerschaltung 88(98) mit der sehr genauen und konstanten Schwingung des Quarzoszillators zu vergleichen. Dieser Vergleich kann auch mit mehreren Halb- oder Vollperioden erfolgen. Darüber hinaus ist es möglich, die Anzahl der von Eichmessung zu Eichmessung herangezogenen Oszillatorperioden zu variieren, so daß sich eine ganze Eichskala für die Ausgangsamplituden der Zeit/Amplituden-Wandlerschaltung 88(98) ergibt.

Im zweiten Fall liefert die Ablaufsteuerung 80 ein Befehlssignal an den Eingang E2(E4) der START-STOP-Steuerung 82, wodurch diese veranlaßt wird, auf den Leitungen 112(122) und 113(123) genau gleichzeitig ein START- bzw. STOP-Signal abzugeben. Da das STOP-Signal durch das Verzögerungsglied 87(97) um die Zeit $\tau$ verzögert bei der Zeit/Amplituden-Wandlerschaltung 88(98) ankommt, erzeugt diese ein diesem Zeitraum $\tau$ entsprechendes Ausgangssignal. Da die Zeit $\tau$ gerade so gewählt ist, daß sie etwas länger als der Anlaufszeitraum ist, in dem das Ausgangssignal der Zeit/Amplituden-Wandlerschaltung in nicht linearer Weise anwächst, stellt das so gewonnene Ausgangssignal einen Korrekturwert dar, der geeignet ist, den Einfluß dieser Nichtlinearität aus einem gerade zuvor gewonnenen Meß- oder Eichwert zu eliminieren, Auch werden durch diesen Korrekturwert Laufzeitunterschiede erfaßt, die eventuell zwischen dem der Zeit/Amplituden-Wandlerschaltung das START-Signal zuführenden Signalpfad und dem entsprechenden STOP-Signalpfad aufgrund parasitärer Effekte vorhanden sind.

Jeder dieser Meßwerte A wurde ja so gewonnen, daß die Zeit/Amplituden-Wandlerschaltung 88(98) nicht nur während des auszumessenden Zeitraums $\Delta t$ sondern auch noch während der zusätzlichen Zeitspanne $\tau$ im Betrieb war. Wenn diese Zeitspanne $\tau$ auch am Ende der jeweiligen Meßzeit $\Delta t + \tau$ angehängt wurde, so enthält durch die spezielle Wahl von $\tau$ doch jeder Meß- bzw. Eichwert A am Ausgang der Zeit/Amplituden-Wandlerschaltung 88(98) einen während der ersten $\tau$ Zeiteinheiten gewonnenen im wesentlichen nichtlinearen Anteil a und einen anschließend gewonnenen, zum eigentlich interessierenden Zeitraum $\Delta t$ streng proportionalen Anteil $\Delta A$:

$$A = a + \Delta A$$

wobei zunächst die Größe dieser beiden Anteile nicht bekannt ist. Daher wird unter Regie der Ablaufsteuerung 80 der Meßwert A, der ein Zeitabstands- oder ein Eichmeßwert sein kann, zunächst in einer ersten (dritten) Sample-and-Hold-Schaltung 89(99) gespeichert. Sofort danach wird die Zeit/Amplituden-Wandlerschaltung 88(98) in den Ausgangszustand zurückgesetzt und von der Ablaufsteuerung 80 ein Befehlssignal an den Eingang E2(E4) der START-STOP-Steuerung 82 gegeben, die dann in der oben beschriebenen Weise gleichzeitig ein START- und STOP-Signal über die Leitungen 112(122) und 113(123) abgibt, wodurch die Zeit/Amplituden-Wandlerschaltung 88(98) veranlaßt wird, über den Zeitraum $\tau$ hinweg genau den zu obiger Gleichung gehörenden im wesentlichen nichtlinearen Anteil a zu erzeugen. Dieser Anteil a wird dann unter Steuerung der Ablaufsteuerung 80 in eine zweite (vierte) Sample-and-Hold-Schaltung 90(100) übernommen, worauf ein Differenzverstärker 91(101) gemäß

$$A - a = \Delta A$$

den zum eigentlich interessierenden Zeitraum $\Delta t$ streng proportionalen Wert $\Delta A$ errechnen und an den Analog/Digital-Wandler 92(102) weitergeben kann.

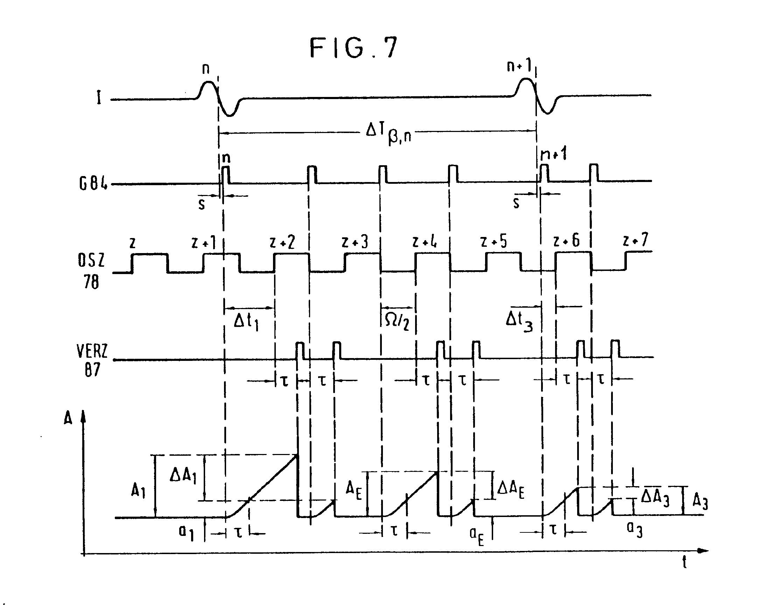

Diese Abläufe sind in den Fig. 6 und 7 in Form von Signal-Diagrammen nochmals zusammengefaßt dargestellt.

In Fig. 6 sind über einer Zeitskala in der obersten Zeile zwei vom Geber 29 abgegebene Impulse dargestellt, die, da der Geber 29 dem die Markierungsgruppe $\alpha$ abtastenden Meßfühler 15 nachgeschaltet ist (Fig. 1), der m-ten und m+1-ten Markierung dieser Gruppe $\alpha$ zugeordnet sein sollen.

In den beiden darunterliegenden Zeilen GEB 28(N) und GEB 28(M) sind die auf diese Impulse des Gebers 29 jeweils unmittelbar folgenden Impulse n und n+1 des Gebers 28, der dem die Markierungsgruppe $\beta$ abtastenden Meßfühler 20 nachgeschaltet ist (Fig. 1), in zwei verschiedenen Zeiträumen dargestellt, nämlich eimmal in dem Zeitraum N, in dem der Nullpunkt der Winkelmessung festgelegt und durch Bestimmung der betreffenden Meßwinkelabstände $\varphi_{\mu\nu}$ die den winkelmäßigen Anschluß zwischen den beiden Markierungsgruppen $\alpha$ und $\beta$ herstellende Wertetabelle ermittelt wird, und zum anderen in einem Zeitraum M, in welchem durch entsprechende Messungen eine von der Nullage abweichende Winkelstellung $\varphi(M)$ der beiden Körper 2 und 3 bestimmt werden soll.

Der obersten Zeile GEB 29(N,M) kommt in Fig. 6 in Verbindung mit den beiden Zeilen GEB 28(N) und GEB 28(M) also eine doppelte Funktion zu, nämlich die relative Lage der von den beiden Gebern 28 und 29 stammenden Impulse in zwei verschiedenen Zeiträumen (damit selbstverständlich auch für verschiedene Umdrehungen des Markierungsträgers 5) und in zwei verschiedenen Winkelstellungen der beiden Körper 2 und 3 darzustellen. Durch diese Verklammerung der ganz verschiedenen Zeiträume N (Nullpunktsbestimmung) und M (Messung der neuen Winkellage) vermittels der einen Zeile GEB 29(M,N) ergibt sich aus rein darstellungstechnischen Gründen die Voraussetzung, daß die Winkelgeschwindigkeit des Markierungsträgers in diesen beiden Zeiträumen dieselbe ist ($\omega(N) = \omega(M)$). Es sei hier ausdrücklich darauf hingewiesen, daß diese Bedingung im allgemeinen Fall nicht erfüllt sein muß, da beim vorliegenden Verfahren anders als bei dem über einer Zeitskala aufgetragenen Diagramm der Fig. 6 nicht die in verschiedenen Zeiträumen gemessenen Zeitabstände sondern die sich aus diesen Zeitabständen durch Multiplikation mit der jeweils gerade herrschenden Winkelgeschwindigkeit $\omega$ des Markierungsträgers 5 ergebenden und somit von $\omega$ unabhängigen Winkel gemäß Gleichungen (1) miteinander in Beziehung gesetzt werden.

Dennoch wurde die in obigem Sinn etwas einschränkende Darstellungsweise für Fig. 6 gewählt, weil sich mit ihr sehr deutlich zeigen läßt, daß sich bei der Bestimmung der Winkellage $\varphi(M)$ für aufeinanderfolgende "gemischte" Markierungspaare m, n und m+1, n+1 ganz verschiedene Zeitabstände $\Delta\theta_{mn}$ und $\Delta\theta_{m+1,n+1}$

ergeben können, weil aufgrund der mit geringem Aufwand betriebenen Herstellung des Markierungsträgers 5 die Abstände der Markierungen m und m+1 einerseits und n und n+1 andererseits ganz unterschiedlich sind.

Dennoch ergeben sich für die hier als während des Zeitraums M unveränderlich vorausgesetzte, auszumessende Winkellage $\varphi(M)$ zwei gleiche Meßwerte $\varphi_1(M)$ und $\varphi_2(M)$, weil die gespeicherten Meßwinkelabstände $\varphi_{mn}$ und $\varphi_{m+1,n+1}$ die vorhandenen Unregelmäßigkeiten in der Teilung der beiden Gruppen $\alpha$ und $\beta$ richtig wiedergeben.

In der vierten Signalzeile OSZ 78(M) von Fig. 6 sind die im Zeitraum M auftretenden Ausgangsimpulse des frei laufenden quarzgesteuerten Oszillators 78 dargestellt, der mit der Periode $\Omega$ schwingt.

Darunter zeigt Fig. 6 die zur Bestimmung der interessierenden Zeitabstände tatsächlich erfaßten Werte, nämlich die als Zeitfeinmeßwerte mit Hilfe der Zeit/Amplituden-Wandlerschaltungen 88 und 98 (Fig. 5) zu messenden Zeitabstände $\Delta t_1$, $\Delta t_2$, $\Delta t_3$ und $\Delta t_4$ zwischen den Geberimpulsen m, n, m+1 und n+1 und der jeweils unmittelbar nächsten,steigenden Oszillatorimpulsflanke und die mit Hilfe des Zählers 79 (Fig. 5) ermittelten, zugehörigen Zählwerte $z_1$, $z_2$, $z_3$ und $z_4$.

Wie sich aus Fig. 6 unmittelbar ergibt, lassen sich die zunächst interessierenden "gemischten" Zeitabstände $\Delta\theta_{\mu\nu}$ aus den direkt gemessenen Werten nach folgenden Gleichungen berechnen.

$$\Delta\theta_{mn} = (z_2 - z_1)\Omega + \Delta t_1 - \Delta t_2$$

$$\Delta\theta_{m+1,n+1} = (z_4 - z_3)\Omega + \Delta t_3 - \Delta t_4$$

Ebenso unmittelbar ergibt sich aus Fig. 6, daß diese "gemischten" Zeitabstände mit den interessierenden Winkelmeßwerten $\varphi_1(M)$ und $\varphi_2(M)$ durch folgende Beziehungen verknüpft sind:

$$\Delta\theta_{m,n}\,\omega(M) = \varphi_1(M) + \varphi_{mn}$$

$$\Delta\theta_{m+1,n+1}\,\omega(M) = \varphi_2(M) + \varphi_{m+1,n+1}$$

Man sieht, daß sich aus diesen Gleichungen durch einfache Umformung die Gleichungen (1) ergeben.

Die in Fig. 6 ebenfalls dargestellten Zeitabstände $\Delta T_{\alpha m}$ und $\Delta T_{\beta n}$ genügen den folgenden Beziehungen:

$$\Delta T_{\alpha m} = (z_3 - z_1)\Omega + \Delta t_1 - \Delta t_3$$

$$\Delta T_{\beta n} = (z_4 - z_2)\Omega + \Delta t_2 - \Delta t_4$$

und können mit Hilfe der entsprechenden, gespeicherten Eichwerte zur Bestimmung der momentanen Winkelgeschwindigkeit herangezogen werden:

$$\omega(M) = \frac{\Delta T_{\alpha m E}}{\Delta T_{\alpha m}}\,\omega_E$$

$$\omega(M) = \frac{\Delta T_{\beta n E}}{\Delta T_{\beta n}}\,\omega_E$$

Es ist klar, daß es prinzipiell genügt, die Winkelgeschwindigkeit des Markierungsträgers mit Hilfe nur einer Markierungsgruppe $\alpha$ oder $\beta$ zu überwachen.

In jedem Fall zeigt Fig. 6 deutlich, daß sämtliche zur Bestimmung der momentanen Winkellage $\varphi(M)$ erforderlichen Werte aus den Feinzeitmeßwerten $\Delta t_r$ und den Zählwerten $z_r$ (r = 1,2,3...) gewonnen werden können.

Da es, wie bereits erwähnt, nicht genügt, daß die momentane Winkelgeschwindigkeit $\omega(M)$ des Markierungsträgers 5 während der Bestimmung der "gemischten" Zeitstände $\Delta\theta_{\mu,\nu}$ gemessen wird, sondern während dieser Zeiträume tatsächlich konstant sein muß, werden dann zum Beispiel für den "gemischten" Zeitabstand $\Delta\theta_{m+1,n+1}$ die durch Messung der markierungsgruppeninternen Zeitabstände $\Delta T_{\alpha m}$ und $\Delta T_{\alpha m+2}$ (letzterer in Fig. 6 nicht mehr dargestellt) ermittelten Winkelgeschwindigkeitswerte zur Überprüfung der Konstanz dieser Winkelgeschwindigkeit herangezogen.

Zeigt sich, daß die Winkelgeschwindigkeit in den betreffenden Zeiträumen konstant war, so wird dieser Meßwert zur Berechnung des zugehörigen Winkelabstandes $\varphi_r(M)$ verwendet.

Zur Steigerung der Meßgenauigkeit kann man dann zum Beispiel vorgeben, daß 50 oder 100 solcher Werte gebildet und aus ihnen der Mittelwert errechnet werden soll. Je nach dem, ob sich in dem betreffenden Zeitraum M die Winkelgeschwindigkeit des Markierungsträgers mehrfach oder gar nicht ändert, werden dann diese 50 oder 100 Meßwerte etwas langsamer oder auch sehr schnell erfaßt.

Fig. 6 zeigt weiterhin, daß der Zähler 79 die Impulse des Oszillators 78 fortlaufend zählt (Zählwerte $z_r$). Da die Zählkapazität des Zählers 79 nicht unbegrenzt groß ist, muß er spätestens nach Erreichen eines maximalen Zählwertes mit der Abzählung wieder von vorne beginnen. Bei diesem Zurücksetzen kann der Anschluß zu den vorausgehenden Zählwerten $z_r$ verlorengehen, so daß es zweckmäßig ist, dafür zu sorgen, daß der Zähler 79 immer nur dann zurückgesetzt wird, wenn gerade keine interessierenden Zeitabstände ausgemessen werden. Wenn sich die Winkellage der beiden Körper 32 häufig ändert, kann es geschehen, daß kein zum Zurücksetzen des Zählers 79 geeigneter Zeitraum zur Verfügung steht. In diesem Fall wird es zweckmäßig sein, die in Fig. 5 wiedergegebene Zeitmeßeinheit 30 in der Weise abzuändern, daß ein zweiter die Impulse des Oszillators 78 abzählender Zähler vorgesehen wird. Jeder dieser beiden Zähler wäre dann einer Markierungsgruppe α bzw. β zugeordnet und würde zum Beispiel zwangsläufig immer dann auf Null zurückgesetzt, wenn die Null-Markierung der betreffenden Gruppe am Meßfühler vorbeiläuft. Aus der Kenntnis der Anzahl der in jeder Markierungsgruppe α und β vorhandenen Markierungen könnte dann aber der Rechner und Speicher 81 immer die zur Bildung der "gemischten" Zeitabstände erforderliche Korrelation zwischen den Zählwerten der beiden Zähler herstellen.

Die Gewinnung der in Fig. 6 dargestellten Feinzeitmeßwerte $\Delta t_f$ soll im folgenden nun im Zusammenhang mit Fig. 7 dargestellt werden.

In Fig. 7 sind in der obersten Zeile I zwei Signale wiedergegeben, wie sie z. B. im Geber 28 am Punkt I entstehen, wenn am Meßfühler 20 der Reihe nach zwei Markierungen, beispielsweise die n-te und die n+1-te Markierung der Gruppe β vorbeilaufen. Die Nulldurchgänge der zwei Signale I stellen die aus den realen Markierungen abstrahierten idealen Marken dar, deren Zeitabstand $\Delta T_{\beta,n}$ ausgemessen werden soll.

In der zweiten Zeile zeigt Fig. 7 die am Ausgang des ODER-Gatters 84 erscheinenden Impulse. Dies sind zunächst einmal die zwei jeweils den Signalen I zugeordneten Impulse, die über die Leitung 114 vom Geber 28 an das Gatter 84 gelangen und von diesem weitergegeben werden. Die steigenden Flanken dieser Impulse sind um s gegen die Nulldurchgänge der Signale I verzögert, doch ist diese Verzögerung - anders als dargestellt - außerordentlich klein und spielt auch bei einer angestrebten sehr hohen Meßgenauigkeit keine Rolle, da sie über die kurze Zeit $\Delta T_{\beta,n}$ als konstant angenommen werden kann.

Zur Ermittelung von $\Delta T_{\beta,n}$ ist es also ohne Fehler möglich, die Zeitabstände der steigenden Flanken der in Rede stehenden Impulse am Ausgang des Gatters 84 zu messen.

Da diese dem Gatter 84 vom Geber 28 zugeführten Impulse über die Leitung 111 auch an den Zähler 79 und die Ablaufsteuerung 80 gelangen, kann aus dem Zähler 79 der nach dem ersten dieser zwei Impulse erreichte Zählwert ausgelesen werden. Gemäß Fig. 7, in deren dritter Zeile von oben die Rechteckimpulse des Oszillators 78 dargestellt sind, ist dies der Zählwert $z + 2$.

In entsprechender Weise wird nach dem zweiten Geberimpuls aus dem Zähler 79 der Zählwert $z + 6$ ausgelesen.

Somit erhält man für den interessierenden Zeitabstand $\Delta T_{\beta,n}$ den Grobmeßwert

$$\Delta T_{\beta,nG} = [(z + 6) - (z + 2)]\, \Omega = 4\, \Omega$$

wenn $\Omega$ die Periodenlängen der Oszillatorschwingung ist.

Aufgrund der hier angenommenen Tatsache, daß zwischen den einzelnen Geberimpulsen nur wenige Oszillatorimpulse auftreten, ist dieser Grobmeßwert jedoch nicht geeignet, den interessierenden Zeitabstand $\Delta T_{\beta,n}$ mit hinreichender Genauigkeit darzustellen.

Daher wird gleichzeitig mit der steigenden Flanke eines jeden einem Gebersignal entsprechenden Ausgangsimpulses des Gatters 84 die Zeit/Amplituden-Wandlerschaltung 88 gestartet, deren Ausgangssignal, wie in der untersten Zeile von Fig. 7 dargestellt, zunächst in nichtlinearer Weise, spätestens aber nach der Zeit τ streng proportional mit der Zeit anwächst.

Die auf die steigenden Flanken der vom Geber 28 stammenden Impulse am Ausgang des Gatters 84 jeweils unmittelbar folgenden steigenden Impulsflanken des Oszillators 78 sind in Fig. 7 mit den Zählwerten $z + 2$ und $z + 6$ gekennzeichnet und besitzen von den ersteren die als Zeit-Feinmeßwerte interessierenden Zeitabstände $\Delta t_1$ und $\Delta t_3$. Die eben genannten steigenden Impulsflanken des Oszillators 78 werden über die Gatter 85 und 86 an das Verzögerungsglied 87 gegeben, das, wie in der zweiten Zeile von unten in Fig. 7 dargestellt, mit der vorbestimmten Verzögerungszeit τ einen STOP-Befehl an die Zeit/Amplituden-Wandlerschaltung 88 weitergibt.

Somit stehen am Ausgang der Zeit/Amplituden-Wandlerschaltung zu den Zeiten $\Delta t_1 + \tau$ und $\Delta t_3 + \tau$ die Amplituden $A_1$ und $A_3$ zur Verfügung, die jeweils in die zuvor gelöschte erste Sample-and-Hold-Schaltung 89 eingegeben werden. Gleichzeitig wird die Zeit/Amplituden-Wandlerschaltung 88 auf ihren Ausgangspegel zurückgesetzt.

Mit der jeweils nächsten fallenden Oszillatorimpulsflanke erzeugt nun die über ihren Eingang E2 von der Ablaufsteuerung 80 aktivierte START-STOP-Steuerung 82 gleichzeitig einen START- und einen STOP-Impuls.

Der STAKT-Impuls erscheint am Ausgang des Gatters 84 praktisch ohne Verzögerung, wie dies in Zeile 2 der Fig. 7 dargestellt ist und bewirkt das in der untersten Zeile dieser Figur dargestellte erneute Ansteigen des Ausgangssignals der Zeit/Amplituden-Wandlerschaltung 88.

Der STOP-Impuls durchläuft die Verzögerungsschaltung 87 und erscheint mit der Verzögerung τ an deren Ausgang. Nach jeder Meßwerterfassung wird also die Zeit/Amplituden-Wandlerschaltung nochmals für die Zeit τ in Betrieb gesetzt, was zur Erzeugung der in der untersten Zeile der Fig. 7 ebenfalls dargestellten Korrekturwerte $a_1$ und $a_3$ führt.

Diese Korrekturwerte werden jeweils in die zweite Sample-and-Hold-Schaltung 90 eingegeben und durch den Differenzverstärker 91 von den in der ersten Sample-and-Hold-Schaltung jeweils gerade enthaltenen Meßwerten $A_1$ bzw. $A_3$ subtrahiert, so daß nach den Gleichungen

$$A_1 - a_1 = \Delta A_1$$

$$A_3 - a_3 = \Delta A_3$$

19

in den Analog/Digitalwandler 92 die zu den interessierenden Zeit-Feinmeßwerten $\Delta t_1$ und $\Delta t_3$ streng proportionalen Amplitudenwerte eingegeben werden.

Hieraus kann der Rechner und Speicher 81 dann die Zeit-Feinmeßwerte bestimmen und gemäß der Gleichung

$$\Delta T_{\beta,n} = \Delta T_{\beta,nG} + \Delta t_1 - \Delta t_3$$

den gesuchten Zeitabstand $\Delta T_{\beta,n}$ berechnen.

Es sei hier darauf hingewiesen, daß sich so gewonnene Zeitabstände $\Delta T_{\beta,n}$ $T_{\beta,n+1}$, .... zwischen aufeinanderfolgenden Markierungen einer Gruppe aufsummieren lassen, ohne daß es zu einer Summierung der Meßfehler kommt. Aus der obigen Gleichung folgt nämlich

$$\Delta T_{\beta,n} + \Delta T_{\beta,n+1} + ... \quad = \Delta T_{\beta,nG} + \Delta t_1 - \Delta t_3 +$$
$$+ \Delta T_{\beta,n+1G} + \Delta t_3 - \Delta t_5 +$$
$$+ .....$$

Man sieht, daß hier mit Ausnahme von $\Delta t_1$ sämtliche mit Meßfehlern behaftete Feinzeitmeßwerte $\Delta t_3$, $\Delta t_5$... herausfallen, so daß sich ihre Fehler nicht summieren können.

Die die Messung der Korrekturwerte $a_1$, $a_3$ ... einleitenden intern erzeugten START-Impulse müssen nicht unbedingt in der dargestellten Weise zeitlich mit den fallenden Oszillatorimpulsflanken korreliert sein, die unmittelbar auf die die Aufnahme der Meßwerte $A_1$, $A_3$ beendenden steigenden Oszillatorimpulsflanken folgen. Wesentlich ist nur, daß sie so rechtzeitig nach der jeweils vorausgegangenen Meßwerteerfassung erzeugt werden, daß der durch sie erhaltene Korrekturwert $a_1$, $a_3$ ... ein vernünftiges Maß für den im zugehörigen Meßwert enthaltenen im wesentlichen nichtlinearen Anteil darstellt. Außerdem muß dafür gesorgt sein, daß die Korrekturwerteerfassung abgeschlossen ist, bevor die nächste Meßwert- bzw. Eichwerterfassung beginnt.

Weiterhin ist in Fig. 7 eine im Zeitraum $\Delta T_{\beta,n}$ stattfindende Eichwerterfassung zum Nacheichen der Zeit/Amplituden-Wandlerschaltung 88 mit Hilfe des Quarzoszillators 78 dargestellt.

Zu diesem Zweck erzeugt die über den Eingang E1 von der Ablaufsteuerung 80 getriggerte START-STOP-Steuerung 82 zunächst einen START-Impuls, der exakt mit dem Ausgangssignal des Oszillators 78 synchronisiert ist. In Fig. 7 ist dies der dritte Impuls von links in der Zeile G 84.

Ebenso exakt mit dem Oszillatorsignal synchronisiert gibt die START-STOP-Steuerung 82 um eine vorgegebene Anzahl von Oszillatorhalb- oder-vollperioden verzögert ein STOP-Signal über die Leitung 113 ab. In Fig. 7 ist der einfacheren Darstellung halber angenommen, daß der STOP-Impuls genau eine Quarz-Halbperiode nach dem START-Impuls erzeugt wird. Er durchläuft ebenfalls das Verzögerungsglied 87, so daß also die Zeit/Amplituden-Wandlerschaltung nach der Zeit $\Omega/2 + \tau$ angehalten wird; an ihrem Ausgang liegt dann ein Signal mit der Amplitude $A_E$ an, das wie ein normaler Zeitmeßwert zunächst in der ersten Sample-and-Hold-Schaltung 89 zwischengespeichert wird. Hierauf wird durch Ansteuerung des Eingangs E2 der START-STOP-Steuerung 82 in der gleichen Weise, wie dies oben für die Zeitmeßwerte beschrieben wurde, ein Korrekturwert $a_E$ erzeugt, so daß der Differenzverstärker 91 den eigentlich interessierenden Eichwert $\Delta A_E$ erzeugen kann, der dann ebenfalls digitalisiert und vom Rechner und Speicher 81 weiter verarbeitet wird.

Da allgemein zwischen aufeinanderfolgenden Geberimpulsen eine genügend große Anzahl von Oszillatorimpulsen auftritt, ist es innerhalb jedes Zeitraumes $\Delta T_{\beta,v}$ möglich, eine Nacheichung der Zeit/Amplituden-Wandlerschaltung 88 in der eben beschriebenen Weise vorzunehmen.

Entsprechende Funktionen laufen auch für die zweite Zeit/Amplituden-Wandlerschaltung 98 ab, die also ebenfalls ständig mit Hilfe des quarzgesteuerten Oszillators 78 nachgeeicht wird und deren Meßwerte ebenfalls durch Beseitigung des nichtlinearen Anstiegs teils korrigiert werden.

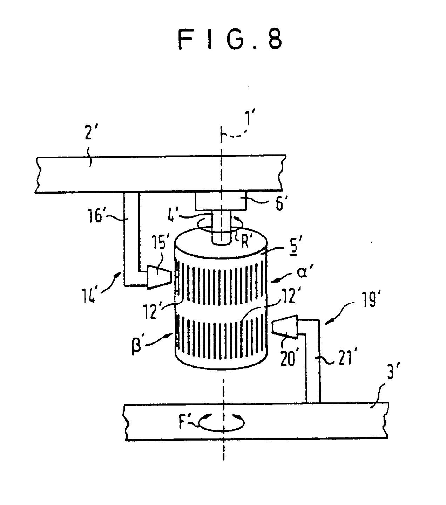

In Fig. 8 ist eine etwas andere Ausführungsform einer erfindungsgemäßen Meßanordnung wiedergegeben. Dabei sind die den in Fig. 1 dargestellten Teilen entsprechenden Teile mit demselben, jedoch mit einem Apostroph versehenen Bezugszeichen gekennzeichnet. Der wesentlichste Unterschied zur Ausführungsform nach Fig. 1 besteht darin, daß hier der Markierungsträger 5' aus einem Kreiszylinder besteht, auf dessen äußerer Mantelfläche die sich in ihrem Licht-Relexionsvermögen von den sie unmittelbar umgebenden Bereichen des Markierungsträgers unterscheidenden Markierungen 12' in zwei Gruppen $\alpha'$ und $\beta'$ angeordnet sind. Auch diese Markierungen bestehen aus länglichen Streifen, die sich im wesentlichen senkrecht zur Drehrichtung R' des Markierungsträgers 5', d.h. hier also im wesentlichen parallel zu den Mantellinien des Zylinders 5' erstrecken. Auch hier sind die beiden Markierungsgruppe $\alpha'$ und $\beta'$ räumlich voneinander getrennt und werden jeweils durch eine Abtastvorrichtung 14' bzw. 19', hier jedoch im Auflichtverfahren abgetastet.

**Patentansprüche**

1. Verfahren zur Messung des Winkels, den zwei um eine Drehachse gegeneinander verdrehbare Körper bezüglich dieser Drehachse miteinander einschließen, bei dem ein um die gemeinsame Drehachse dieser beiden Körper drehbar angeordneter Markierungsträger für eine von Drehbewegungen der beiden Körper unabhängige, ständige Rotation angetrieben wird und auf dem Markierungsträger eine Gruppe von in Drehrichtung beabstandet angebrachten Markierungen mit Hilfe von zwei Meßfühlern abgetastet wird, von denen der eine mit dem einen und der andere mit dem anderen der beiden Körper drehfest verbunden ist und die beim Vorbeilaufen der Markierungen jeweils eine Folge von Signalen abgeben, von denen jedes jeweils einer Markierung entspricht, und bei dem der Zeitabstand zwischen den beiden Signalen wenigstens eines Paares von Signalenlermittelt wird, von denen das eine von dem einen Meßfühler und das andere von dem anderen Meßfühler erzeugt wird,

dadurch gekennzeichnet,

- daß aus den Signalen der Meßfühler wenigstens ein durch Asymmetrien der Markierungen verursachter Kennwert abgeleitet wird, auf dessen Grundlage eine Identifizierung jeder einzelnen jeweils abgetasteten Markierung im Sinne ihrer eindeutigen Unterscheidung von allen anderen Markierungen möglich ist,

daß für eine frei wählbare Referenzwinkelstellung der zwei Meßfühler, die eine Null-Winkelstellung der beiden Körper definiert, für wenigstens ein Paar von identifizierten Markierungen der als Meßwinkelabstand des Markierungspaares bezeichnete Wert des Winkels ermittelt und gespeichert wird, den der Markierungsträger zwischen dem Abtasten der einen Markierung des Markierungspaars durch den einen Meßfühler und dem Abtasten der anderen Markierung des Markierungspaares durch den anderen Meßfühler zu durchlaufen hat,

- daß der Zeitabstand jeweils für solche Signalpaare gemessen wird, deren Signale beim Abtasten von mit Hilfe des wenigstens einen Kennwertes ausgewählten Markierungen erzeugt werden, und

- daß der gesuchte Winkel auf der Grundlage folgender Größen berechnet wird:

(i) dem für wenigstens ein ausgewähltes Signalpaar gemessenen Zeitabstand,

(ii) der während der Messung des jeweiligen Zeitabstandes herrschenden Winkelgeschwindigkeit des Markierungsträgers und

(iii) dem zu dem Signalpaar gehörenden Meßwinkelabstand.

2. Verfahren nach Anspruch 1, dadurch gekennzeichnet, dan mit jedem der Meßfühler eine eigene Gruppe von Markierungen abgetastet wird, die auf dem Markierungsträger von der anderen Gruppe räumlich getrennt angeordnet ist.

3. Verfahren nach Anspruch 1 oder 2, dadurch gekennzeichnet, daß in jeder Markierungsgruppe nur für eine Markierung ein Kennwert abgeleitet wird, wobei das Meßfühlersignal dieser Markierung jeweils als Nullsignal für eine Abzählung der den übrigen Markierungen zugeordneten Signale dient, und daß die bei der Abzählung erhaltenen Platzziffern der Markierungen zu ihrer Identifizierung verwendet werden.

4. Verfahren nach Anspruch 3, dadurch gekennzeichnet, daß die Asymmetrie, aus der der Kennwert der einen Markierung abgeleitet wird, darin besteht, daß sich diese Markierung in ihrer Länge und/oder Breite von der Länge und/oder Breite der übrigen Markierungen wesentlich unterscheidet.

5. Verfahren nach Anspruch 3, dadurch gekennzeichnet, daß die Asymmetrie, aus der der Kennwert der einen Markierung abgeleitet wird, darin besteht, daß der Winkelabstand dieser Markierung zu einer ihr unmittelbar benachbarten Markierung sich wesentlich von den Winkelabständen aller anderen einander unmittelbar benachbarten Markierungen unterscheidet.

6. Verfahren nach einem der Ansprüche 1 oder 2, dadurch gekennzeichnet, daß als Asymmetrien Unterschiede in den Winkelabständen der Markierungen dienen und daß während wenigstens einer Umdrehung für jede der Markierungsgruppen die Zeitabstände aller aufeinanderfolgenden, vom zugehörigen Meßfühler erzeugten Signale gemessen und als Kennwerte verwendet werden.

7. Verfahren nach einem der Ansprüche 2 bis 6, dadurch gekennzeichnet, daß zur Bestimmung wenigstens eines Meßwinkelabstandes in der Null-Winkelstellung der beiden Körper der Zeitabstand zwischen einem an dem einen Meßfühler durch eine identifizierte Markierung der einen Gruppe hervorgerufenen Signal und einem an dem anderen Meßfühler durch eine identifizierte Markierung der anderen Gruppe hervorgerufenen Signal gemessen und mit der während der Messung herrschenden Winkelgeschwindigkeit des Markierungsträgers multipliziert wird.

8. Verfahren nach einem der Ansprüche 1 bis 7, dadurch gekennzeichnet, daß in einem Eichlauf die Zeitabstände zwischen allen während einer vollen Umdrehung des Markierungsträgers auftretenden, unmittelbar aufeinanderfolgenden Signalen sowohl an dem einen als auch an dem anderen Meßfühler gemessen, die so erhaltenen Meßwerte mit der Winkelgeschwindigkeit des Markierungsträgers multipliziert und die so erhaltenen Eichwerte für die Winkelabstände innerhalb einer jeden Markierungsgruppe unter Beibehaltung der Zuordnung zu den zu diesen Signalen gehörenden, identifizierten Markierungen gespeichert werden.

9. Verfahren nach Anspruch 8 unter Ausschluß der direkten Rückbeziehung auf Anspruch 1, dadurch gekennzeichnet, daß aus dem wenigstens einen Meßwinkelabstand von zwei identifizierten Markierungen, von denen die eine zur einen und die andere zur anderen der beiden Gruppen von Markierungen gehört, und aus den Eichwerten für die Winkelabstände der Markierungen jeweils innerhalb einer jeden Gruppe die Meßwinkelabstände einer Vielzahl von Markierungen, von denen immer die eine zur einen und die andere zu der anderen Gruppe gehört, berechnet und längerfristig gespeichert werden.

10. Verfahren nach Anspruch 9, dadurch gekennzeichnet, daß ein Eichlauf wenigstens zwei volle Umdrehungen des Markierungsträgers umfaßt, daß die Zeitabstände der während der ersten dieser beiden Umdrehungen unmittelbar aufeinanderfolgenden Signale sowohl an dem einen als auch an dem anderen Meßfühler zunächst nur zwischengespeichert und mit den zugehörigen, während der wenigstens zweiten Drehung gemessenen Zeitabständen verglichen werden und daß bei einer Übereinstimmung der Vergleichswerte innerhalb vorgegebener Toleranzgrenzen der Kehrwert wenigstens eines während dieser Umdrehungen gemessenen Zeitabstandes zwischen zwei von ein und derselben Markierung an einem Meßfühler hervorgerufenen, einer vollen Umdrehung des Markierungsträgers entsprechenden Signalen als Maß für die momentane Winkelgeschwindigkeit des Markierungsträgers verwendet wird, mit der die zwischengespeicherten Zeitabstandswerte multipliziert und dann als Eichwerte längerfristig gespeichert werden.

11. Verfahren nach einem der Ansprüche 8 bis 10, dadurch gekennzeichnet, daß der Eichlauf zur ständigen Nacheichung wiederholt wird.

12. Verfahren nach Anspruch 11, dadurch gekennzeichnet, daß ein Eichlauf immer dann durchgeführt wird, wenn die beiden Körper nach einer Drehbewegung eine neue Ruhelage eingenommen haben und daß erst nach diesem Eichlauf die Ausmessung der neuen Winkelstellung erfolgt.

13. Verfahren nach einem der Ansprüche 8 bis 12, dadurch gekennzeichnet, daß bei jeder auf einen Eichlauf folgenden Umdrehung des Markierungsträgers an wenigstens einem der Meßfühler die Zeitabstände aller unmittelbar aufeinanderfolgender Signale gemessen und die momentane Drehgeschwindigkeit des Markierungsträgers aus den einzelnen Zeitabständen dem jeweils zugehörigen gespeicherten Eichwert berechnet wird.

14. Verfahren nach Anspruch 13, dadurch gekennzeichnet, daß zur Berechnung der momentanen Winkelstellung der beiden Körper wenigstens der Zeitabstand zwischen einem von einer identifizierten Markierung an dem einen Meßfühler hervorgerufenen Signal und dem unmittelbar nächsten, am anderen Meßfühler auftretenden, einer identifizierten Markierung zugeordneten Signal gemessen, mit der momentanen Winkelgeschwindigkeit multipliziert und der so erhaltene Winkelwert mit dem gespeicherten Meßwinkelabstand dieser beiden Markierungen vorzeichenrichtig addiert wird.

15. Verfahren nach Anspruch 14, dadurch gekennzeichnet, daß der Zeitabstand zwischen dem der identifizierten μ-ten Markierung der einen Gruppe zugeordneten Signal und dem unmittelbar nächsten, einer identifizierten Markierung der anderen Gruppe zugeordneten Signal nur dann zur Berechnung der momentanen Winkellage der beiden Körper herangezogen wird, wenn die anhand des Zeitabstandes zwischen den Signalen der (μ-1)-ten und der μ-ten Markierung der einen Gruppe gemessene Winkelgeschwindigkeit des Markierungsträgers zumindest mit der anhand des Zeitabstandes zwischen den Signalen der (μ+1)-ten und der (μ+2)-ten Markierung dieser einen Gruppe gemessenen Winkelgeschwindigkeit des Markierungsträgers innerhalb vorgegebener Toleranzgrenzen übereinstimmt.

16. Verfahren nach Anspruch 15, dadurch gekennzeichnet, daß eine Vielzahl von Zeitabständen zwischen jeweils einem von einer identifizierten Markierung an dem einen Meßfühler hervorgerufenen Signal und dem unmittelbar nächsten, am anderen Meßfühler auftretenden, einer identifizierten Markierung zugeordneten Signal gemessen und auf die jeweilige Winkelstellung der beiden Körper umgerechnet wird und daß die so erhaltenen Winkelwerte miteinander verglichen werden.

17. Verfahren nach Anspruch 16, dadurch gekennzeichnet, daß aus einer Änderung der so erhaltenen Winkelwerte die Geschwindigkeit einer zwischen den beiden Körpern stattfindenden Drehbewegung errechnet wird.

18. Verfahren nach einem der Ansprüche 13 bis 17, dadurch gekennzeichnet, daß an beiden Meßfühlern die zur Ermittelung der momentanen Drehgeschwindigkeit des Markierungsträgers erforderlichen Messungen durchgeführt und die beiden so erhaltenen Drehgeschwindigkeitswerte miteinander verglichen werden und daß aus dabei festgestellten Abweichungen die Geschwindigkeit einer zwischen den beiden Körpern auftretenden Drehbewegung ermittelt wird.

19. Verfahren nach einem der vorhergehenden Ansprüche, dadurch gekennzeichnet, daß zur Abtastung einer jeden Gruppe von Markierungen zwei einander diametral gegenüberliegende, jeweils am gleichen Körper drehfest montierte Meßfühler vorgesehen sind.

20. Verfahren nach einem der vorhergehenden Ansprüche, dadurch gekennzeichnet, daß für die verschiedenen Zeitabstandsmessungen die Impulse eines freilaufenden, quarzgesteuerten Oszillators abgezählt werden und daß beim Auftreten eines Signals an dem einen oder dem anderen Meßfühler der nach der steigenden Flanke des nächsten Oszillatorimpulses erreichte Zählwert ausgelesen und weiterverarbeitet wird, und daß zur Bestimmung der zeitlichen Lage der Meßfühlersignale innerhalb der jeweiligen Schwingungsperiode des Oszillators durch diese Signale jeweils eine dem betreffenden Meßfühler zugeordnete Zeit/Amplituden-Wandlerschaltung gestartet und durch die steigende Flanke des nächsten Oszillatorimpulses angehalten wird.

21. Verfahren nach Anspruch 20, dadurch gekennzeichnet, daß die Zeit/Amplituden-Wandlerschaltung immer wieder dadurch nachgeeicht wird, daß sie durch eine Flanke eines Oszillatorimpulses gestartet und durch eine nachfolgende Oszillatorimpulsflanke angehalten wird und daß der so erhaltene Zeitmeßwert der Zeit/Amplituden-Wandlerschaltung mit dem zwischen diesen beiden Oszillatorimpulsflanken liegenden Zeitraum verglichen wird.

22. Verfahren nach Anspruch 20 oder 21, dadurch gekennzeichnet, daß das Anhalten der Zeit/Amplituden-Wandlerschaltung durch die steigende Flanke des entsprechenden Oszillatorimpulses bei jeder Zeitabstandsmessung und bei jeder Eichmessung mit einer vorbestimmten zeitlichen Verzögerung erfolgt und daß die Zeit/Amplituden-Wandlerschaltung nach jeder dieser Messungen durch ein schaltungsintern erzeugtes

22

Startsignal gestartet und durch ein gleichzeitig mit diesem Startsignal erzeugtes, ebenfalls der vorbestimmten zeitlichen Verzögerung unterworfenes Stopsignal wieder angehalten wird und daß der so gewonnene Korrekturwert von dem vorausgehend gewonnenen Zeitmeßwert bzw. Eichmeßwert subtrahiert wird.

23. Verfahren nach einem der Ansprüche 1 bis 22, dadurch gekennzeichnet, daß durch jeden der Meßfühler aus den auf dem Markierungsträger angebrachten realen Markierungen dadurch ideale Marken abstrahiert werden, daß der Durchgang eines aus dem vom Meßfühler beim Vorbeilaufen einer Markierung abgegebenen Signal abgeleiteten elektrischen Signals durch einen vorgegebenen konstanten Spannungspegel ermittelt wird, und daß die Zeitabstände dieser idealen Marken gemessen werden.

24. Vorrichtung zur Messung des Winkels zwischen zwei um eine gemeinsame Drehachse gegeneinander verdrehbaren Körper gemäß dem Verfahren nach Anspruch 1, mit
- einem um die gemeinsame Drehachse (1) der beiden Körper (2, 3) drehbar angeordneten Markierungsträger (5), auf dem in Drehrichtung voneinander beabstandete Markierungen (12) angebracht sind,
- Einrichtungen (6) zur Erzeugung einer von Drehbewegungen der Körper (2, 3) unabhängigen kontinuierlichen Drehbewegung des Markierungsträgers,
- zwei Meßfühlern (15, 20; 15′, 20′) zum Abtasten des Markierungsträgers, von denen der eine mit dem einen Körper und der andere mit dem anderen Körper drehfest verbunden ist und die jeweils das Vorbeilaufen von Markierungen an den Meßfühlern anzeigende Signale erzeugen,
- einer von den Signalen der Meßfühler (15, 20; 15′, 20) beaufschlagten Meß- und Auswerteschaltung (25), welche eine Zeitmeßeinheit (30) zur Ermittlung des Zeitabstands zwischen den beiden Signalen wenigstens eines Paares von Signalen aufweist, von denen eines von dem einen Meßfühler und das andere von dem anderen Meßfühler erzeugt wird,
dadurch gekennzeichnet, daß
- die Meß- und Auswerteschaltung (25) zusätzlich folgende Einrichtungen enthält:
a) eine Identifizierungsschaltung (33) zur Erkennung und Unterscheidung der einzelnen an den Meßfühlern vorbeilaufenden Markierungen auf der Grundlage wenigstens eines aus den Signalen der Meßfühler abgeleiteten, durch Asymmetrien in den Markierungen verursachten Kennwerts,
b) eine mit der Identifizierungsschaltung (33) und der Zeitmeßeinheit (30) verbundene Steuerschaltung (35) zur Veranlassung der Messung solcher Zeitabstände in der Zeitmeßeinheit, welche zwischen Signalen liegen die von jeweils zwei beliebig ausgewählten und mittels der Identifizierungsschaltung erkannten Markierungen während des Vorbeilaufens der einen dieser beiden Markierungen an dem einen Meßfühler und der anderen Markierung an dem anderen Meßfühler von diesen Meßfühlern erzeugt werden,
c) eine Rechen- und Speicherschaltung (55, 57) zur Speicherung des als Meßwinkelabstand bezeichneten Winkels, den der Markierungsträger jeweils zwischen dem Abtasten der beiden einem Signalpaar zugeordneten ausgewählten Markierungen durchläuft, wenn sich die beiden Meßfühler in einer eine Referenzwinkelstellung bildenden Position befinden, sowie zur Berechnung des einer beliebigen Stellung der beiden Körper entsprechenden gesuchten Winkels auf der Grundlage folgender Größen:
(i) dem in der beliebigen Stellung der beiden Körper für wenigstens ein ausgewähltes Paar von Markierungen gemessenen Zeitabstand;
(ii) der während der Messung des jeweiligen Zeitabstands herrschenden Winkelgeschwindigkeit;
(iii) dem Meßwinkelabstand des ausgewählten Markierungspaares.

25. Vorrichtung nach Anspruch 24, dadurch gekennzeichnet, daß die Rechen- und Speicherschaltung (55, 57) so ausgebildet ist, daß sie aufgrund eines in einer frei gewählten Null-Winkelstellung der beiden Körper (2, 3; 2′, 3′) erzeugten Befehlssignals aus dem Zeitabstandsmeßwert zwischen wenigstens zwei Signalen, von denen das eine von dem einen und das andere von dem anderen der wenigstens zwei Meßfühler (15, 20; 15′, 20′) stammt, und der momentanen Winkelgeschwindigkeit des Markierungsträgers (5; 5′) den Meßwinkelabstand zwischen den wenigstens zwei den Signalen zugeordneten Markierungen (12; 12′) berechnet.

26. Vorrichtung nach Anspruch 24 oder 25, dadurch gekennzeichnet, daß die Meß- und Auswerteschaltung (25) weiterhin folgende Bestandteile umfaßt:
- einen Zwischenspeicher (50), der die Zeitabstandsmeßwerte für die von den Meßfühlern (15, 20; 15′, 20′) während einer Umdrehung des Markierungsträgers (5; 5′) jeweils erzeugten Signalfolgen speichert,
- eine Vergleichsschaltung (51), die die für jede Signalfolge bei einer nachfolgenden Umdrehung des Markierungsträgers (5; 5′) neu gewonnenen Zeitabstandsmeßwerte mit den zugehörigen, zwischengespeicherten Zeitabstandsmeßwerten vergleicht, und daß
- die Rechen- und Speicherschaltung (55, 57) Mittel (55) umfaßt, die in Abhängigkeit vom Vergleichsergebnis Eichwerte für die Winkelabstände identifizierter Markierungen (12; 12′) und die momentane Winkelgeschwindigkeit des Markierungsträgers (5; 5′) berechnet und die Eichwerte speichern.

27. Vorrichtung nach einem der Ansprüche 24 bis 26, dadurch gekennzeichnet, daß jeder der Meßfühler (15, 20; 15′, 20′) aus einer Differential-Fotodiode (62) besteht, der ein ihre Ausgangssignale formender Geber (28, 29) nachgeschaltet ist, der wenigstens ein mit den beiden Ausgängen der Differential-Fotodiode (62) verbundenes differenzbildendes Glied (66) sowie einen das Ausgangssignal des differenzbildenden Gliedes (66) mit einem vorgegebenen konstanten Spannungspegel vergleichenden Komparator (70) umfaßt.

28. Vorrichtung nach einem der Ansprüche 24 bis 27, dadurch gekennzeichnet, daß die Zeitmeßeinheit (30) einen quarzgesteuerten Oszillator (78), einen die Oszillatorperioden abzählenden Zähler (79) und zwei jeweils durch die vom zugehörigen Geber (28, 29) an einem Start-Eingang abgegebenen Signale triggerbare und durch vom Quarzoszillator (78) an einem Stop-Eingang abgegebene Signale anhaltbare Zeit/Amplituden-Wandlerschaltungen (88, 98) mit nachgeschalteten Analog/Digital-Wandlern (92, 102) umfaßt.

29. Vorrichtung nach Anspruch 28, dadurch gekennzeichnet, daß dem Stop-Eingang einer jeden Zeit/Amplituden-Wandlerschaltung (88, 98) ein Verzögerungsglied (87, 97) vorgeschaltet ist, daß die Zeitmeßeinheit (30) eine Schaltungsanordnung (82) zur Erzeugung und gleichzeitigen Abgabe jeweils eines Start- und eines Stopsignals für die Zeit/Amplituden-Wandlerschaltungen (88, 98) umfaßt, und daß dem Analogausgang einer jeden Zeit/Amplituden-Wandlerschaltung (88, 98) in paralleler Anordnung zwei Sample-and-Hold-Schaltungen (89, 90, 99, 100) nachgeschaltet sind, von denen die eine (89, 99) zur Aufnahme und Speicherung von von der zugehörigen Zeit/Amplituden-Wandlerschaltung (88, 98) abgegebenen Zeitmeßwerten und die andere (90, 100) zur Aufnahme und Speicherung der jeweils entsprechenden, von der zugehörigen Amplituden-Wandlerschaltung (88, 98) aufgrund der von der Schaltungsanordnung (82) erzeugten Start- und Stopsignale abgegebenen Korrekturwerte ansteuerbar ist und daß der Ausgang jeweils der einen Sample-and-Hold-Schaltung (89, 99) an den positiven Eingang und der Ausgang jeweils der anderen Sample-and-Hold-Schaltung (90, 100) an den negativen Eingang eines zugehörigen Differenzverstärkers (91, 101) angeschlossen ist, dessen Ausgangssignal dem entsprechenden Analog/Digital-Wandler (92, 102) zugeführt wird.

30. Vorrichtung nach einem der Ansprüche 24 bis 28, dadurch gekennzeichnet, daß auf dem Markierungsträger (5; 5') zwei räumlich voneinander getrennte Gruppen (α, β; α', β') von Markierungen (12; 12') angebracht sind, von denen die eine durch den einen Meßfühler (15; 15') und die andere durch den anderen Meßfühler (20; 20') abgetastet wird.

31. Vorrichtung nach Anspruch 30, dadurch gekennzeichnet, daß der Markierungsträger (5) zwei flache, axial voneinander beabstandet an einer gemeinsamen Welle (4) befestigte Scheiben (10, 11) umfaßt, von denen die eine die eine Markierungsgruppe (α) und die andere die andere Markierungsgruppe (β) trägt.

32. Vorrichtung nach Anspruch 30, dadurch gekennzeichnet, daß der Markierungsträger (5') ein kreiszylindrischer Körper ist, auf dessen Mantelfläche axial voneinander beabstandet die beiden Gruppen (α', β') von Markierungen (12') angebracht sind.

33. Vorrichtung nach einem der Ansprüche 27 bis 32, dadurch gekennzeichnet, daß die Markierungen (12; 12') einer jeden Gruppe (α, β; α', β') sich hinsichtlich ihrer optischen Eigenschaften von den an sie angrenzenden Bereichen des Markierungsträgers (5; 5') unterscheidende, im wesentlichen senkrecht zur Richtung der Drehung des Markierungsträgers (5; 5') verlaufende Streifen sind, und daß die Breite eines jeden Markierungsstreifens größer als die Breite des Trennsteges (63) der Differential-Fotodiode (62) und kleiner als die Breite der Differential-Fotodiode (62) ist.

34. Vorrichtung nach Anspruch 33 dadurch gekennzeichnet, daß sich die Markierungen (12) hinsichtlich der Lichtdurchlässigkeit von den sie umgebenden Bereichen des Markierungsträgers (5) unterscheiden und daß eine den Meßfühler (15, 20) beleuchtende Lichtquelle (17, 22) auf der dem Meßfühler gegenüberliegenden Seite des Markierungsträgers (5) angeordnet ist.

35. Vorrichtung nach Anspruch 33 dadurch gekennzeichnet, daß sich die Markierungen (12') hinsichtlich ihres Licht-Reflexionsvermögens von den sie umgebenden Bereichen des Markierungsträgers (5') unterscheiden und daß eine den Meßfühler (15', 20') beleuchtende Lichtquelle auf derselben Seite des Markierungsträgers wie der Meßfühler angeordnet ist, daß das Licht der Lichtquelle senkrecht auf die Oberfläche des Markierungsträgers gerichtet ist, und daß das in der Bahn des auftreffenden Lichtstrahls vom Markierungsträger reflektierte Licht mit Hilfe eines Strahlenteilers zur Differential-Fotodiode hin umgelenkt wird.

## Claims

1. A method for measuring the angle which two members being rotatable with respect to each other about an axis of rotation enclose with respect to this axis of rotation, in which a mark carrier, which is arranged rotatably about the common axis of rotation of said two members, is driven for a continuous rotation independent of a rotational movement of said two members, and in which a group of marks, which are disposed on the mark carrier spaced apart in the direction of rotation, is sensed by means of two sensors, one of which is, with respect to rotation, fixedly connected with one of said two members, and the other one of which is, with respect to rotation, fixedly connected with the other one of said two members, and each of which, upon passing of said marks, provides a series of signals each of which corresponds to one of said marks, and in which the time distance between the two signals of a pair of signals is determined, the one of said two signals being generated by the one of said sensors and the other one of said two signals being generated by the other one of said sensors,

characterized

- in that, from the signals of the sensors, at least one characteristic value is derived which is caused by asymmetries of the marks and on the basis of which an identification of each single respectively sensed mark is possible in the sense, that it can be unambigously distinguished from all other marks,

- in that, for an optionally choosable reference angle position of said two sensors, which defines a zero angle position of said two members, for at least one pair of identified marks the value of the angle is determined and stored which angle is designated by the term "measured angular distance of the pair of marks" and which is the angle through which the mark carrier has to pass between the sensing of the one mark of the pair of marks by one of the sensors and the sensing of the other mark of the pair of marks by the other one of the sensors,

- in that the time distance is measured for such pairs of signals, the signals of which are generated upon the sensing of marks, which are selected by the aid of said at least one characteristic value,

- and in that the wanted angle is calculated on the basis of the following values:

(i) the time distance which is measured for at least one selected pair of signals,

(ii) the angular velocity of the mark carrier prevailing during the measurement of the respective time distance, and

(iii) the measured angular distance belonging to said pair of signals.

2. A method according to claim 1, characterized in that by each of the sensors a group of marks of its own is sensed which is arranged on the mark carrier with a spatial distance from the other group.

3. A method according to claim 1 or 2, characterized in that, in each group of marks, only for one mark a characteristic value is derived, whereby the sensor signal of this mark each time is used as a zero signal for a counting of the signals which are assigned to the other marks, and in that the numbers of position of the marks, which are obtained by that counting, are used for their identification.

4. A method according to claim 3, characterized in that the asymmetry, from which the characteristic value of the one mark is derived, consists in the fact that this mark essentially differs with respect to its length and/or width from the length and/or width of the remaining marks.

5. A method according to claim 3, characterized in that the asymmetry, from which the characteristic value of the one mark is derived, consists in the fact that the angular distance of this mark from one of its immediately adjacent marks essentially differs from the angular distances of all remaining marks which are immediately adjacent to one another.

6. A method according to one of claims 1 or 2, characterized in that as asymmetries differences with respect to the angular distances of the marks are used, and in that, during at least one revolution, for each of the groups of marks the time distances of all subsequent signals produced by the respective sensor are measured and are used as characteristic values.

7. A method according to any of claims 2 to 6, characterized in that, for determining at least one measured angular distance in the zero angle position of the two members, the time distance between a signal, which is generated at the one sensor by an identified mark of the one group, and a signal, which is generated at the other sensor by an identified mark of the other group, is measured and is multiplied by the angular velocity of the mark carrier prevailing during the measurement.

8. A method according to any of claims 1 to 7, characterized in that, in a calibrating run, the time distances between all signals immediately following one another and appearing during a complete revolution of the mark carrier are measured at the one sensor as well as at the other sensor, in that the measurement results thus obtained are multiplied by the angular velocity of the mark carrier, and in that the calibrating values thus obtained for the angular distances within each mark group are stored while maintaining their assignment to the identified marks belonging to these signals.

9. A method according to claim 8 except the direct dependency on claim 1, characterized in that from the at least one measured angular distance of two identified marks, the one of which belongs to the one group of marks and the other one of which belongs to the other group of marks, and from the calibrating values for the angular distances of the marks within each group, respectively, the measured angular distances of a plurality of marks, of which each time one belongs to the one group and the other belongs to the other group, are calculated and stored for a longer period of time.

10. A method according to claim 9, characterized in that a calibrating run comprises at least two complete revolutions of the mark carrier, in that the time distances of the signals immediately following one another during the first one of these two revolutions at the one as well as at the other of the two sensors are first only intermediately stored and are compared with the corresponding time distances measured during the at least second revolution, and in that, given the coincidence of the values compared within predetermined tolerance limits, the reciprocal value of at least one time distance, which is measured during said revolution between two signals which correspond to a complete revolution of the mark carrier and which are caused by one and the same mark at one sensor, is used as a measure for the instantaneous angular velocity of the mark carrier, by which the time distance values, which are intermediately stored, are multiplied and then stored for a longer period as calibrating values.

11. A method according to any of claims 8 to 10, characterized in that the calibrating run is repeated for continuous re-calibration.

12. A method according to claim 11, characterized in that a calibrating run is always carried out if the two members assume a new position of rest after a rotation movement and in that the new angular position is measured only after this calibrating run.

13. A method according to any of claims 8 to 12, characterized in that, upon each revolution of the mark carrier following a calibrating run, the time distances of all immediately following signals are measured at at least one of the sensors and in that the instantaneous speed of rotation of the mark carrier is calculated from the individual time distances and the respective corresponding calibrating value.

14. A method according to claim 13, characterized in that, in order to calculate the instantaneous angular position of the two members, at least the time distance between a signal, produced by an identified mark at one sensor, and the immediately following signal, which occurs at the other sensor and is assigned to an

0 040 359

identified mark, is measured, and is multiplied by the instantaneous angular velocity, and in that the angular value thus obtained is added correct as to sign to the stored measured angular distance of these two marks.

15. A method according to claim 14, characterized in that the time distance between the signal assigned to the identified µ-th mark of the one group and the immediately following signal assigned to an identified mark of the other group is only then used for calculating the instantaneous angular position of the two members if the angular velocity of the mark carrier, which is measured by means of the time distance between the signals of the (µ-1)-th and the µ-th mark of the one group, coincides with the angular velocity of the mark carrier, which is measured by means of the time distance between the signals of the (µ+1)-th and the (µ+2)-th mark of this one group, at least within predetermined tolerance limits.

16. A method according to claim 15, characterized in that a plurality of time distances in each case between a signal produced by an identified mark at one sensor and the immediately following signal, which occurs at the other sensor and is assigned to an identified mark, are measured and are converted to the respective angle position of the two members, and in that the angle values thus obtained are compared with one another.

17. A method according to claim 16, characterized in that from a change in the angular values thus obtained the velocity of a rotation movement occurring between the two members is calculated.

18. A method according to any of the claims 13 to 17, characterized in that the measurements necessary for determining the instantaneous speed of rotation of the mark carrier are carried out at both sensors, in that the two rotational speed values thus obtained are compared with each other, and in that, from differences determined thereby, the velocity of a rotation movement occurring between the two members is calculated.

19. A method according to any of the preceeding claims, characterized in that for the sensing of each group of marks two sensors are provided which are diametrically opposite to each other and are, in each case, fixedly mounted with respect to rotation at the same member.

20. A method according to any of the preceeding claims, characterized in that the pulses of a free-running, quarz-controlled oscillator are counted for the different time distance measurements, and in that, upon the occurrence of a signal at the one or the other of the sensors, the count attained after the rising edge of the next oscillator pulse is read out and processed further, and in that for determining the position as to time of the sensor signals within the respective period of oscillation of the oscillator a time/amplitude converter circuit, which is assigned to the respective sensor, is started by these signals and is stopped by the rising edge of the next oscillator pulse.

21. A method according to claim 20, characterized in that the time/amplitude converter circuit is re-calibrated over and again by being started by an edge of an oscillator pulse and being stopped by a subsequent edge of an oscillator pulse, and in that the measured time value of the time/amplitude converter circuit thus obtained is compared with the period which elapses between these two edges of oscillator pulses.

22. A method according to claim 20 or 21, characterized in that the stopping of the time/amplitude converter circuit by the rising egde of the corresponding oscillator pulse occurs with a predetermined delay for each time distance measurement and for each calibrating measurement, and in that the time/amplitude converter circuit is started after each of these measurements by a start signal produced within the circuit and is again stopped by a stop signal produced simultaneously with said start signal and also subject to said predetermined delay, and in that the correction value thus obtained is subtracted from the previously obtained time measurement or calibration measurement value.

23. A method according to any of claims 21 to 22, characterized in that ideal marks are abstracted by each of the sensors from the real marks disposed on the mark carrier by determining the crossover of an electric signal through a predetermined constant voltage level, said electric signal being derived from the signal emitted by the sensor when a mark passes it.

24. An apparatus for measuring the angle between two members being rotatable with respect to each other about a common axis of rotation according to the method of claim 1, comprising
- a mark carrier (5) which is arranged to be rotatable about the common axis of rotation (1) of said two members (2, 3) and on which are disposed marks (12) which are spaced apart from each other in the direction of rotation,
- means (6) for generating a continuous rotational movement of said mark carrier independent of rotational movements of said members (2, 3),
- two sensors (15, 20; 15', 20') for sensing the mark carrier, the one of which is, with respect to rotation, fixedly connected with one of said members and the other one of which is, with respect to rotation, fixedly connected with the other one of said members and each of which generates signals indicating that marks are passing the sensor,
- a measuring and evaluating circuit (25) to which the signals of the sensors (15, 20; 15', 20') are applied, and which comprises a time measuring unit (30) for determining the time distance between the two signals of a pair of signals, the one of which is generated by the one of the sensors and the other one of which is generated by the other one of the sensors,
characterized in that the measuring and evaluating unit (25) additionally comprises the following means:
a) an identification circuit (33) for recognizing and distinguishing the individual marks passing the sensors on the basis of at least one characteristic value which is caused by asymmetries in the marks and which is derived from the signals of the sensors,
b) a control circuit (35) which is connected with the identification circuit (33) and the time measuring unit (30) for effecting in the time measuring unit the measurement of time distances lying between signals which are, in

26

each case, generated, by two optionally selected marks being recognized by means of the identification circuit when the one of the two marks passes one sensor and the other of said two marks passes the other sensor, by said sensors,

c) a calculation and storage circuit (55, 57) for storing the angle designated by the term "measured angular distance", through which the mark carrier passes during the sensing of the two selected marks being assigned to a signal pair, when the two sensors are in a position defining a reference angle position, and for calculating the wanted angle which corresponds to an arbitrary position of the two members on the basis of the following values:

(i) the time distance which is measured for at least one selected pair of marks in said arbitrary position of the two members,;

(ii) the angular velocity prevailing during the measurement of the respective time distance;

(iii) the measured angular distance of the selected pair of marks.

25. An apparatus according to claim 24, characterized in that the calculation and storage circuit (55, 57) is so designed that it calculates from the time distance measuring value between at least two signals, the one of which is generated by the one and the other one of which is generated by the other of said at least two sensors (15, 20; 15', 20'), and from the instantaneous angular velocity of the mark carrier (5; 5') the measured angular distance between the at least two marks (12; 12') assigned to said signals in reaction on a command signal which is generated in an optionally selected zero angle position of the two members (2, 3).

26. An apparatus according to claim 24 or 25, characterized in that the measuring and evaluating unit (25) further comprises the following parts:

- an intermediate memory (50) which stores the time distance measurement values for the signal sequences produced by the sensors (15, 20; 15', 20') during one revolution of the mark carrier (5; 5'),

- a comparison circuit (51) which compares the time distance measurement values newly obtained for each signal sequence during a subsequent revolution of the mark carrier (5; 5') with the corresponding intermediately stored time distance measurement values,

and in that

said calculation and storage circuit (55, 57) comprises means (25), which, dependent on the comparison result, calculate calibrating values for the angular distances of identified marks (12; 12') and the instantaneous angular velocity of the mark carrier (5; 5'), and which store the calibrating values.

27. An apparatus according to any of claims 24 to 25, characterized in that each of the sensors (15, 20; 15', 20') consists of a differential photo diode (62) to the output of which is connected a transmitter (28, 29) forming its output signals, said transmitter comprising at least one subtracting member (66) connected to the two outpus of the differential photo diode (62), and of a comparator (70) which compares the output signal of the subtracting member (66) with a predetermined constant voltage level.

28. An apparatus according to any of claims 24 to 27, characterized in that the time measuring unit (30) comprises a quarz-controlled oscillator (78), a counter (79) counting the oscillator periods, and two time/amplitude converter circuits (88, 98) to the outputs of which analog-to-digital converters (92, 102) are connected, whereby said time/amplitude converter circuits can be triggered by signals forwarded from their respective transmitters (28, 29) to a start input, and can be stopped by signals emitted by the quarz oscillator (78) to a stop input.

29. An apparatus according to claim 28, characterized in that a delay member (87, 97) is connected before the stop input of each time/amplitude converter circuit (99, 98), in that the time measuring unit (30) comprises a circuit arrangement (8u52) for producing and simultaneously emitting a start and a stop signal, respectively, for the time/amplitude converter circuits (88, 98), and in that two sample-andholrd circuits (89, 90, 99, 100) are connected in parallel behind the analog output of each time/amplitude converter circuit (88, 98), whereby one of said sample-and-hold circuits (89, 99) can be triggered for collecting and storing time measurement values emitted by the corresponding time/amplitude converter circuit (88, 95) and the other (90, 100) can be triggered for collecting and storing the respectively corresponding correction values emitted by the corresponding time/amplitude converter circuit (88, 98) due to the start and stop signals produced by the circuit arrangement (82), and in that, in each case, the output of the one sample-and-hold circuit (89, 99) is connected to the positive input of a corresponding differential amplifier (91, 101) and the output of the other sample-and-hold circuit (90, 100) is connected to the negative input of said differential amplifier (91, 101), the output signal of which is fed to the corresponding analog-to-digital converter (92, 102).

30. An apparatus according to any of claims 24 to 28, characterized in that two groups ($\alpha$, $\beta$; $\alpha'$, $\beta'$) of marks (12; 12'), which are geometrically separated, are arranged on the mark carrier (5; 5') the one group being sensed by one sensor (15; 15') and the other group being sensed by the other sensor (20; 20').

31. An apparatus according to claim 30, characterized in that the mark carrier (5) comprises two flat discs (10, 11) which are arranged on a common shaft (4) and are axially spaced apart from each other, the one of which carries the one mark group ($\alpha$) and the other carries the other mark group ($\beta$).

32. An apparatus according to claim 30, characterized in that the mark carrier (5') is a circularly cylindrical member on the generating surface of which the two groups ($\alpha'$, $\beta'$) of marks (12') are arranged and spaced with an axial distance from each other.

33. An apparatus according to any of claims 27 to 32, characterized in that the marks (12; 12') of each group ($\alpha$, $\beta$; $\alpha'$, $\beta'$) are stripes which differ with respect to their optical properties from the adjacent portions of the mark carrier (5; 5') and which extend substantially perpendicular to the direction of rotation of the mark carrier

27

(5; 5'), and in that the width of each mark stripe is larger than the width of the separating ridge (63) of the differential photo diode (62) and smaller than the width of the differential photo diode (62).

34. An apparatus according to claim 33, characterized in that the marks (12) differ with respect to transparency from the areas of the mark carrier (5) surrounding them, and in that a light source (17, 22) illuminating the sensor (15, 20) is arranged on the side of the mark carrier (5) opposite to the sensor.

35. An apparatus according to claim 33, characterized in that the marks (12') differ with respect to their light reflectivity from the areas of the mark carrier (5') surrounding them, and in that a light source illuminating the sensor (15', 20') is arranged on the same side of the mark carrier as the sensor, in that the light from the light source is vertically directed to the surface of the mark carrier, and in that the light reflected by the mark carrier in the path of the impinging light beam is diverted to the differential photo diode by means of a beam splitter.

## Revendications

1. Procédé pour la mesure de l'angle que font deux corps pouvant tourner l'un par rapport à l'autre autour d'un axe de rotation, relativement à cet axe de rotation, dans laquelle on entraîne un support de marques disposé de manière à pouvoir tourner autour de l'axe de rotation commun de ces deux corps pour une rotation permanente indépendante des mouvements de rotation des deux corps et on explore sur le support de marques un groupe de marques disposées avec espacement dans la direction de rotation, à l'aide de deux capteurs dont l'un est relié de façon solidaire en rotation à l'un des deux corps et l'autre à l'autre de ces deux corps et qui, au passage des marques, émettent chaque fois une suite de signaux dont chacun correspond chaque fois à une marque, et dans laquelle on détermine l'intervalle de temps entre les deux signaux d'au moins une paire de signaux dont l'un est engendré par l'un des capteurs et l'autre par l'autre capteur, caractérisé en ce

- que des signaux des capteurs, on tire au moins une valeur caractéristique causée par des asymétries des marques, sur la base de laquelle une identification de chacune des marques chaque fois explorée est possible, au sens de sa distinction nette de toutes les autres marques,

- que pour une position d'angle de référence des deux capteurs, qui peut être choisie librement et qui définit une position d'angle nul des deux corps, on détermine et on mémorise pour au moins une paire de marques identifiées la valeur de l'angle, désignée comme espacement d'angle de mesure de la paire de marques que le support de marques doit parcourir entre l'exploration de l'une des marques de la paire de marques par l'un des capteurs et l'exploration de l'autre marque de la paire de marques par l'autre capteur,

- que l'on mesure chaque fois l'intervalle de temps pour des paires de signaux dont les signaux sont engendrés lors de l'exploration de margues choisies à l'aide de la ou des valeurs caractéristiques, et

- que l'on calcule l'angle cherché sur la base des grandeurs suivantes:

(i) l'intervalle de temps mesuré pour au moins une paire de signaux choisie,

(ii) la vitesse angulaire du support de marques, régnant pendant la mesure de l'intervalle de temps dont il s'agit et

(iii) l'espacement d'angle de mesure appartenant à la paire de signaux.

2. Procédé selon la revendication 1, caractérisé en ce qu'avec chacun des capteurs on explore un groupe particulier de marques qui est disposé sur le support de marques en étant séparé physiquement de l'autre groupe.

3. Procédé selon l'une des revendications 1 et 2, caractérisé en ce que dans chaque groupe de marques, on tire une valeur caractéristique pour une marque seulement, le signal de capteur de cette marque servant chaque fois de signal zéro pour un comptage des signaux adjoints aux autres marques, et en ce que l'on utilise les chiffres de place des marques, obtenus lors du comptage, pour leur identification.

4. Procédé selon la revendication 3, caractérisé en ce que l'asymétrie de laquelle on tire la valeur caractéristique de l'une des marques réside dans le fait que cette marque, par sa longueur et/ou sa largeur, se distingue notablement de la longueur et/ou de la largeur des autres marques.

5. Procédé selon la revendication 3, caractérisé en ce que l'asymétrie de laquelle on tire la valeur caractéristique de l'une des marques réside dans le fait que l'espacement angulaire de cette marque par rapport à une marque qui en est immédiatement voisine se distingue notablement des espacements angulaires de toutes les autres marques immédiatement voisines l'une de l'autre.

6. Procédé selon l'une des revendications 1 et 2, caractérisé en ce que l'on utilise comme asymétries des différences dans les espacements angulaires des marques et que pendant au moins un tour pour chacun des groupes de marques, les intervalles de temps de tous les signaux successifs engendrés par le capteur adjoint, sont mesurés et utilisés comme valeurs caractéristiques.

7. Procédé selon l'une des revendications 2 à 6, caractérisé en ce que pour la détermination d'au moins un espacement d'angle de mesure, on mesure, dans la position angulaire zero des deux corps, l'intervalle de temps entre un signal provoqué sur l'un des capteurs par une marque identifiée de l'un des groupes et un signal provoqué sur l'autre capteur par une marque identifiée de l'autre groupe et qu'on le multiplie par la vitesse angulaire du support de marques régnant pendant la mesure.

8. Procédé selon l'une des revendications 1 à 7, caractérisé en ce que dans une course d'étalonnage, on mesure aussi bien sur l'un que sur l'autre des capteurs les intervalles de temps entre tous les signaux se succédant immédiatement, se produisant pendant un tour complet du support de marques, en ce que l'on multiplie les valeurs mesurées ainsi obtenues par la vitesse angulaire du support de marques, et en ce que l'on mémorise les valeurs d'étalonnage ainsi obtenues des espacements angulaires au sein de chacun des groupes de marques, en conservant la corrélation avec les marques identifiées appartenant à ces signaux.

9. Procédé selon la revendication 8, avec exclusion de la relation directe avec la revendication 1, caractérisé en ce qu'en partant du ou des espacements angulaires de deux marques identifiées dont l'une appartient à l'un et l'autre à l'autre des deux groupes de marques, et en partant des valeurs d'étalonnage des espacements angulaires des marques chaque fois au sein de chaque groupe on calcule les espacements d'angle de mesure de multiples marques dont l'une appartient toujours à l'un et l'autre à l'autre groupe, et en ce qu'on les mémorise à long terme.

10. Procédé selon la revendication 9, caractérisé en ce qu'une course d'étalonnage comprend au moins deux tours complets du support de marques, en ce que l'on mémorise tout d'abord seulement de façon intermédiaire les intervalles de temps des signaux se succédant immédiatement pendant le premier de ces deux tours, aussi bien sur l'un que sur l'autre des capteurs, et en ce qu'on les compare aux intervalles de temps correspondants mesurés pendant au moins le deuxième tour et qu'en cas de concordance des valeurs de comparaison, dans le cadre de limites de tolérances prescrites, on utilise l'inverse au moins d'un intervalle de temps mesuré pendant ces tours entre deux signaux provoqués sur un capteur par une même marque, correspondant à un tour complet du support de marques, comme mesure de la vitesse angulaire momentanée du support de marques, en ce ce qu'on le multiplie par les valeurs d'intervalle de temps mémorisées de façon intermédiaire et en ce qu'alors on les mémorise à long terme comme valeurs d'étalonnage.

11. Procédé selon l'une des revendications 8 à 10, caractérisé en ce que l'on répète la course d'étalonnage pour la vérification continuelle d'étalonnage.

12. Procédé selon la revendication 11, caractérisé en ce que l'on effectue toujours une course d'étalonnage lorsque les deux corps, après un mouvement de rotation, ont pris une nouvelle position de repos et que seulement après cette course d'étalonnage s'effectue la mesure de la nouvelle position angulaire.

13. Procédé selon l'une des revendications 8 à 12, caractérisé en ce qu'à chaque tour du support de marques qui suit une course d'étalonnage, on mesure sur au moins un des capteurs les intervalles de temps de tous les signaux se succédant immédiatement, et en ce que l'on calcule la vitesse momentanée de rotation du support de marques en partant des différents intervalles de temps et de la valeur d'étalonnage mémorisée chaque fois correspondante.

14. Procédé selon la revendication 13, caractérisé en ce que pour le calcul de la position angulaire momentanée des deux corps, on mesure au moins l'intervalle de temps entre un signal provoqué sur l'un des capteurs par une marque identifiée et le signal suivant immédiatement, se produisant sur l'autre capteur, adjoint à une marque identifiée, en ce qu'on le multiplie par la vitesse angulaire momentanée, et en ce que l'on additionne la valeur angulaire ainsi obtenue à l'espacement angulaire de mesure mémorisé de ces deux marques, avec signe correct.

15. Procédé selon la revendication 14, caractérisé en ce que pour le calcul de la position angulaire momentanée des deux corps, on a seulement recours à l'intervalle de temps entre le signal correspondant à la $\mu$-ième marque identifiée de l'un des groupes et le signal suivant immédiatement, correspondant à une marque identifiée de l'autre groupe, lorsque la vitesse angulaire du support de marques, mesurée d'après l'intervalle de temps entre les signaux de la ($\mu$-1)-ième et de la $\mu$-ième marques de l'un des groupes concorde au moins, dans le cadre de limites de tolérance prescrites, avec la vitesse angulaire du support de marques, mesurée d'après l'intervalle de temps entre les signaux de la ($\mu$+1)-ième et de la ($\mu$+2)-ième marques de ce même groupe.

16. Procédé selon la revendication 15, caractérisé en ce que l'on mesure de multiples intervalles de temps chaque fois entre un signal provoqué sur l'un des capteurs par une marque identifiée et le signal suivant immédiatement, se produisant sur l'autre capteur et correspondant à une marque identifiée, et en ce qu'on les convertit chaque fois en positions angulaires momentanées des deux corps, et en ce que l'on compare entre elles les valeurs angulaires ainsi obtenues.

17. Procédé selon la revendication 16, caractérisé en ce qu'en partant d'une variation des valeurs angulaires ainsi obtenues, on calcule la vitesse d'un mouvement de rotation se produisant entre les deux corps.

18. Procédé selon l'une des revendications 13 à 17, caractérisé en ce que sur les deux capteurs, on effectue les mesures nécessaires à la détermination de la vitesse de rotation momentanée du support de marques, et en ce que l'on compare entre elles les deux valeurs de vitesse de rotation ainsi obtenues, et en ce qu'en partant d'écarts alors constatés, on détermine la vitesse d'un mouvement de rotation se produisant entre les deux corps.

19. Procédé selon l'une des revendications précédentes, caractérisé en ce que pour l'exploration de chacun des groupes de marques sont prévus deux capteurs diamétralement opposés entre eux, chaque fois montés de façon solidaire en rotation sur le même corps.

20. Procédé selon l'une des revendications précédentes, caractérisé en ce que pour les différentes mesures d'intervalle de temps, on compte les impulsions d'un oscillateur à marche libre commandé par quartz, en ce que lors de l'apparition d'un signal sur l'un ou l'autre capteur, on lit et on traite ensuite la valeur numérique atteinte après le flanc ascendant de la prochaine impulsion d'oscillateur, en ce que pour déterminer la position dans le temps des signaux de capteur dans le cadre de la période d'oscillation considérée de l'oscillateur, on fait démarrer chaque fois par ces signaux un circuit convertisseur temps/amplitude adjoint au capteur considéré, que l'on arrête par le flanc ascendant de l'impulsion suivante de l'oscillateur.

21. Procédé selon la revendication 20, caractérisé en ce que l'on vérifie sans cesse l'étalonnage du circuit convertisseur temps/amplitude par le fait qu'il démarre sous l'action d'un flanc de l'impulsion de l'oscillateur et est arrêté par le flanc suivant d'impulsion d'oscillateur, et en ce que l'on compare la valeur mesurée de temps du circuit convertisseur temps/amplitude, ainsi obtenue, au laps de temps se situant entre ces deux flancs d'impulsion de l'oscillateur.

22. Procédé selon l'une des revendications 20 et 21, caractérisé en ce que l'arrêt du circuit convertisseur temps/amplitude par le flanc ascendant de l'impulsion d'oscillateur correspondante s'effectue, à chaque mesure d'intervalle de temps et à chaque mesure d'étalonnage, avec un retard de temps prédéterminé, et en ce que le circuit convertisseur temps/amplitude est mis en marche après chacune de ces mesures par un signal de démarrage engendré à l'intérieur du circuit et est arrêté à nouveau par un signal d'arrêt engendré en même temps que ce signal de démarrage, également soumis au retard de temps prédéterminé, et en ce que l'on soustrait la valeur de correction ainsi obtenue de la valeur mesurée de temps obtenue ou valeur mesurée d'étalonnage obtenue précédemment.

23. Procédé selon l'une des revendication 1 à 22, caractérisé en ce que par chacun des capteurs, des marques idéales sont abstraites des marques réelles disposées sur le support de marques, par le fait que le passage par un niveau de tension constant d'un signal electrique dérivé du signal émis par le capteur au passage d'une marque est déterminé et en ce que l'on mesure les intervalles de temps de ces marques idéales.

24. Dispositif pour la mesure de l'angle entre deux corps pouvant tourner l'un par rapport à l'autre autour d'un axe de rotation commun, selon le procédé selon la revendication 1, comportant

- un support de marques (5) disposé de manière à pouvoir tourner autour de l'axe de rotation commun (1) des deux corps (2, 3) et sur lequel sont disposées des marques (12) espacées les unes des autres dans la direction de rotation,

- des agencements (6) pour engendrer un mouvement de rotation permanent du support de marques, indépendant des mouvements de rotation des corps (2, 3),

- deux capteurs (15, 20 ; 15', 20') pour explorer le support de marques, dont l'un est relié de façon solidaire en rotation à l'un des corps et l'autre à l'autre corps et qui engendrent chaque fois des signaux indiquant le passage de marques devant les capteurs,

- un circuit de mesure et d'interprétation (25) alimenté par les signaux des capteurs (15, 20; 15', 20'), qui présente une unité de mesure de temps (30) pour la détermination de l'intervalle de temps entre les deux signaux d'au moins une paire de signaux, dont l'un est engendré par l'un des capteurs et l'autre par l'autre capteur,

caractérisé en ce que

- le circuit de mesure et d'interprétation (25) contient, en outre, les agencements suivants:

a) un circuit d'identification (33) pour reconnaître et distinguer les différentes marques passant devant les capteurs, sur la base d'au moins une valeur caractéristique tirée des signaux des capteurs et causée par des asymétries des marques,

b) un circuit de commande (35) relié au circuit d'identification (33) et à l'unité de mesure de temps (30) pour occasionner la mesure, dans l'unité de mesure de temps, d'intervalles de temps qui se situent entre des signaux qui sont engendrés chaque fois par les capteurs et deux marques choisies de façon quelconque et reconnues au moyen du circuit d'identification, pendant le passage de l'une de ces deux marques devant l'un des capteurs et de l'autre marque devant l'autre capteur,

c) un circuit de calcul et de mémoire (55, 57) pour la mémorisation de l'angle, appelé espacement d'angle de mesure, que parcourt chaque fois le support de marques entre l'exploration des deux marques choisies adjointes à une paire de signaux, quand les deux capteurs se trouvent dans une position formant une position d'angle de référence, ainsi que pour le calcul de l'angle cherché correspondant à une position quelconque des deux corps, sur la base des grandeurs suivantes:

(i) de l'intervalle de temps mesuré dans la position quelconque des deux corps pour au moins une paire choisie de marques;

(ii) de la vitesse angulaire régnant pendant la mesure de l'intervalle de temps dont il s'agit;

(iii) de l'espacement d'angle de mesure de la paire de marques choisie.

25. Dispositif selon la revendication 24, caractérisé en ce que le circuit de calcul et de mémoire (55, 57) est constitué de telle sorte que sur la base d'un signal de commandement engendré dans une position d'angle nul librement choisie des deux corps (2, 3; 2', 3'), il calcule, en partant de la valeur mesurée d'intervalle de temps entre au moins deux signaux dont l'un provient de l'un des capteurs et l'autre de l'autre des capteurs au nombre d'au moins deux (15, 20; 15', 20') et de la vitesse angulaire momentanée du support de marques (5, 5'), l'espacement d'angle de mesure entre les marques (12; 12') au nombre d'au moins deux, adjointes aux signaux.

26. Dispositif selon l'une des revendications 24 et 25, caractérisé en ce que le circuit de mesure et d'interprétation (25) comprend, en outre, les composants suivants:

- une mémoire intermédiaire (50) qui mémorise les valeurs mesurées d'intervalle de temps pour les suites de signaux chaque fois engendrées par les capteurs (15, 20; 15', 20') pendant un tour du support de marques (5; 5'),

- un circuit comparateur (51) qui compare les valeurs de mesure d'intervalle de temps nouvellement obtenues lors d'un tour suivant du support de marques (5; 5') aux valeurs mesurées d'intervalle de temps correspondantes mémorisées de façon intermédiaire, et en ce que

- le circuit de calcul et de mémoire (55, 57) comprend des moyens (55) qui, sous la dépendance du résultat de la comparaison, calculent des valeurs d'étalonnage pour les espacements angulaires de marques identifiées (12; 12') et la vitesse angulaire momentanée du support de marques et mémorisent les valeurs d'étalonnage.

27. Dispositif selon l'une des revendications 24 à 26, caractérisé en ce que chacun des capteurs (15, 20; 15', 20') est formée d'une photodiode différentielle (62) à la suite de laquelle est branché un transmetteur (28, 29) formant ses signaux de sortie et qui comprend au moins un organe formateur de différence (66) relié aux deux sorties de la photodiode différentielle (62) ainsi qu'un comparateur (70) comparant le signal de sortie de l'organe formateur de différence (66) à un niveau de tension constant prescrit.

28. Dispositif selon l'une des revendications 24 à 27, caractérisé en ce que l'unité de mesure de temps (30) comprend un oscillateur commandé par quartz (78), un compteur (79) comptant les périodes de l'oscillateur et deux circuits convertisseurs temps/amplitude (88, 98) pouvant être déclenchés par les signaux transmis par le transmetteur (28, 29) adjoint a une entrée de démarrage et pouvant être arrêtés par des signaux transmis par l'oscillateur à quartz (78) à une entrée d'arrêt, avec convertisseurs analogique/numérique (92, 102) branchés à la suite.

29. Dispositif selon la revendication 28, caractérisé en ce qu'avant l'entrée d'arrêt de chacun des circuits convertisseurs temps/amplitude (88, 98) est branché un organe de retard (87, 97), en ce que l'unité de mesure de temps (30) comprend une disposition de circuit (82) pour engendrer et en même temps émettre chaque fois un signal de démarrage et un signal d'arrêt pour les circuits convertisseurs temps/amplitude (88, 98) et en ce qu'à la suite de la sortie analogique de chacun des circuits convertisseurs temps/amplitude (88, 98) sont branchés, en une disposition parallèle, deux circuits d'échantillonnage et de maintien (89, 90, 99, 100) dont l'un (89, 99) peut être commandé pour la réception et la mémorisation de valeurs de mesure de temps émises par le circuit convertisseur temps/amplitude correspondant (88, 98) et l'autre pour la réception et la mémorisation des valeurs de correction chaque fois correspondantes, émises par le circuit convertisseur temps/amplitude correspondant (88, 98) sur la base des signaux de démarrage et d'arrêt engendrées par la disposition de circuit (82), et en ce que la sortie de l'un des circuits d'échantillonnage et de maintien (89, 99) est chaque fois reliée à l'entrée positive et la sortie de l'autre circuit d'échantillonnage et de maintien (90, 100), chaque fois à l'entrée négative d'un amplificateur différentiel (91, 101) dont le signal de sortie est amené au convertisseur analogique/numérique correspondant (92, 102).

30. Dispositif suivant l'une des revendications 24 à 28, caractérisé en ce que sur le support de marques (5; 5') sont disposées deux groupes (α, β; α', β') de marques (12; 12') séparés physiquement l'un de l'autre, dont l'un est exploré par l'un des capteurs (15; 15') et l'autre par l'autre capteur (20; 20').

31. Dispositif suivant la revendication 30, caractérisé en ce que le support de marques (5) comprend deux disques plats (10, 11), fixés de façon espacée axialement l'un de l'autre à un arbre commun (4), dont l'un porte l'un des groupes de marques (α) et l'autre, l'autre groupe de marques (β).

32. Dispositif selon la revendication 30, caractérisé en ce que le support de marques (5') est un corps cylindrique circulaire sur la surface latérale duquel sont disposés, avec espacement axial entre eux, les deux groupes (α', β') de marques (12').

33. Dispositif selon l'une des revendications 27 à 32, caractérisé en ce que les marques (12; 12') de chacun des groupes (α, β; α', β') sont des bandes se distinguant quant à leurs propriétés optiques des régions adjacentes du support de marques (5; 5'), pratiquement dirigées perpendiculairement à la direction de rotation du support de marques (5; 5'), et en ce que la largeur de chacune des bandes de marque est plus grande que la largeur de la barrette de séparation (63) de la photodiode différentielle (62) et plus petite que la largeur de la photodiode différentielle (62).

34. Dispositif selon la revendication 33, caractérisé en ce que les marques (12) se distinguent quant à leur transparence des régions du support de marques (5) qui les entourent, et en ce qu'une source lumineuse (17, 22) éclairant le capteur (15, 20) est disposée sur le côté du support de marques (5) qui est opposé au capteur.

35. Dispositif selon la revendication 33, caractérisé en ce que les marques (12) se distinguent quant à leur pouvoir de réflexion de lumière des régions du support de marques (5') qui les entourent, et en ce qu'une source lumineuse éclairant le capteur (15', 20') est disposée sur le même côté du support de marques que le capteur, en ce que la lumière de la source lumineuse est dirigée perpendiculairement sur la surface du support de marque, et en ce que la lumière réfléchie par le support de marques, et en le trajet du rayon lumineux incident est déviée, à l'aide d'un diviseur de rayons, vers la photodiode différentielle.

FIG.1

# FIG. 2

# FIG. 3

# FIG.4

# FIG.6

F I G. 5

FIG.7

# F I G . 8